# EUROPEAN PATENT APPLICATION

(11) **EP 4 848 862 A1**
(43) Date of publication of application: **02.12.2026**
(21) Application number: 24920338.1
(22) Date of filing: 25.01.2024
(51) Int. Cl.: H04W 72/23, H04W 52/18, H04W 72/1268

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2024/002216
(87) International publication number: WO 2025/158616

(57) **Abstract**

A terminal according to one aspect of the present disclosure includes a receiving section that receives a sounding reference signal (SRS) configuration for (3TX) uplink (UL) transmission using three antenna ports, and a control section that applies, in the SRS configuration, a power control parameter for a transmission indication state associated with an SRS resource to the UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement, and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel-15 NR supports uplink (UL) Multi Input Multi Output (MIMO) transmission with up to four layers. For future NR, it is studied that UL transmission with more than 4 layers is supported to achieve higher spectral efficiency. For example, for Rel-18 NR, up to 6-rank transmission using 6 antenna ports, up to 6 or 8-rank transmission using 8 antenna ports, and the like are under study.

On the other hand, there can be a case where Rel. 19 or later versions does not support uplink full-power transmission. For this case, it is studied to define a non-coherent UL codebook (non-coherent codebook for UL) in order to easily implement codebook-based transmission using three antenna ports (3-antenna-port codebook-based transmission).

Thus, an object of the present disclosure is to provide a terminal, a radio communication method, and a base station that can appropriately control UL transmission using three antenna ports, for example.

### Solution to Problem

A terminal according to one aspect of the present disclosure includes a receiving section that receives a sounding reference signal (SRS) configuration for (3TX) uplink (UL) transmission using three antenna ports, and a control section that applies, in the SRS configuration, a power control parameter for a transmission indication state associated with an SRS resource to the UL transmission.

### Advantageous Effects of Invention

According to one aspect of the present disclosure, it is possible to appropriately control UL transmission.

### Brief Description of Drawings

[FIG. 1] FIG. 1 is a diagram to show an example of a table of precoding matrices W for single-layer (rank 1) transmission using 4 antenna ports in Rel-16 NR in a case where a transform precoder is disabled.
[FIG. 2] FIG. 2 is a diagram to show an example of a table of precoding matrices W for 2-layer (rank 2) transmission using 4 antenna ports in Rel-16 NR in a case where a transform precoder is disabled.
[FIG. 3] FIG. 3 is a diagram to show an example of a table of precoding matrices W for 3-layer (rank 3) transmission using 4 antenna ports in Rel-16 NR in a case where a transform precoder is disabled.
[FIG. 4] FIG. 4 is a diagram to show an example of a table of precoding matrices W for 4-layer (rank 4) transmission using 4 antenna ports in Rel-16 NR in a case where a transform precoder is disabled.
[FIG. 5] FIG. 5A is a diagram to show an example of a table of precoding matrices W for single-layer (rank 1) transmission using 2 antenna ports in Rel-16 NR. FIG. 5B is a diagram to show an example of a table of precoding matrices W for 2-layer (rank 2) transmission using 2 antenna ports in Rel-16 NR in a case where transform precoding is disabled.
[FIG. 6] FIG. 6 is a diagram to show an example of a correspondence relation between a value of a precoding information and number of layers field, and the number of layers and a TPMI in Rel-16 NR.
[FIG. 7] FIG. 7A to FIG. 7C are diagrams to show SRI indication or second SRI indication in codebook based PUSCH transmission in Rel. 17.
[FIG. 8] FIG. 8 is a diagram to show an example of an antenna layout of eight antenna ports.
[FIG. 9] FIG. 9A and FIG. 9B are diagrams to show examples of a PTRS-DMRS association field in an existing specification.
[FIG. 10] FIG. 10 is a diagram to show an example of association (or association candidates) between DMRS ports - PUSCH antenna ports - PTRS ports.
[FIG. 11] FIGS. 11A to 11D are conceptual diagrams to show correspondence relations between resource sets/resources (patterns 1 to 4) in a codebook for 3TX UE.
[FIG. 12] FIG. 12 is a diagram to show an example of association (correspondence relation) between an SRS resource and a new parameter according to a fifth embodiment.
[FIG. 13] FIG. 13 is a diagram to show an example of association between SRS resource sets - SRS resources - TCI states according to the fifth embodiment.
[FIG. 14] FIG. 14 is a diagram to show an example of association between SRS resource sets - SRS resources - TCI states according to the fifth embodiment.
[FIG. 15] FIG. 15 is a diagram to show an example of association between SRS resource sets - SRS resources - TCI states according to the fifth embodiment.
[FIG. 16] FIG. 16 is a diagram to show an example of association between SRS resource sets - SRS resources - TCI states according to the fifth embodiment.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (Control of Transmissions of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), or aperiodic CSI (Aperiodic SRS (A-SRS)). Note that the UE may transmit a P-SRS and an SP-SRS periodically (or periodically after activation), and transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook-based transmission, the UE may determine a precoder (precoding matrix) for the PUSCH transmission, based on an SRI, a transmitted rank indicator (TRI), and a transmitted precoding matrix indicator (TPMI). In a case of non-codebook-based transmission, the UE may determine a precoder for the PUSCH transmission, based on the SRI.

The SRS resource information may include an SRS resource ID (SRS-ResourceId), the number of SRS ports, an SRS port number, a transmission Comb, SRS resource mapping (for example, time and/or frequency resource position, resource offset, resource periodicity, the number of times of repetition, the number of SRS symbols, SRS bandwidth, and the like), hopping related information, an SRS resource type, a sequence ID, spatial relation information for an SRS, and the like.

The spatial relation information for an SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), or an SRS (for example, another SRS). The SS/PBCH block may be referred to as a synchronization signal block (SSB).

The spatial relation information for the SRS may include, as an index for the certain reference signal described above, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information for the SRS may include a serving cell index, a BWP index (BWP ID), and the like corresponding to the certain reference signal described above.

Regarding a certain SRS resource, when spatial relation information related to an SSB or CSI-RS and an SRS is configured, the UE may transmit the SRS resource by using the same spatial domain filter (spatial domain transmission filter) as a spatial domain filter (spatial domain reception filter) for reception of the SSB or CSI-RS. In this case, the UE may assume that a UE receive beam for the SSB or CSI-RS is the same as a UE transmit beam for the SRS.

Regarding a certain SRS (target SRS) resource, when spatial relation information related to another SRS (reference SRS) and the SRS (target SRS) is configured, the UE may transmit the target SRS resource by using the same spatial domain filter (spatial domain transmission filter) as a spatial domain filter (spatial domain transmission filter) for transmission of the reference SRS. In other words, in this case, the UE may assume that a UE transmit beam for the reference SRS is the same as a UE transmit beam for the target SRS.

Based on a value of a certain field (for example, an SRS resource indicator (SRI) field) in DCI (for example, DCI format 0_1), the UE may determine a spatial relation of a PUSCH scheduled by the DCI. Specifically, the UE may use, for the PUSCH transmission, spatial relation information (for example, the RRC information element "spatialRelationInfo") of an SRS resource determined based on the value (for example, SRI) of the certain field.

In Rel-15/16 NR, when codebook based transmission is used for a PUSCH, the UE may be configured with an SRS resource set including two SRS resources at maximum with codebook usage, by RRC, and may be indicated with one of the two SRS resources at maximum by DCI (one-bit SRI field). A transmit beam for the PUSCH is indicated by the SRI field.

The UE may judge a TPMI and the number of layers (transmission rank) for the PUSCH, based on a precoding information and number of layers field (also referred to hereinafter as a precoding information field). The UE may select, based on the TPMI, the number of layers, and the like above, a precoder from an uplink codebook for the same number of ports as the number of SRS ports indicated by a higher layer parameter "nrofSRS-Ports" configured for an SRS resource indicated by the SRI field above.

In Rel-15/16 NR, when non-codebook based transmission is used for a PUSCH, the UE may be configured with an SRS resource set including four SRS resources at maximum with non-codebook usage, by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

### (Determination of PUSCH Precoder in Codebook (CB) Based Transmission)

As described above, in a case of codebook (CB) based transmission, the UE may determine a precoder for PUSCH transmission, based on an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by precoding information and number of layers field ("Precoding information and number of layers" field) of the DCI. For simplicity, the precoding information and number of layers field is also referred to as a precoding information field.

The UE may report UE capability information related to a precoder type and be configured, by a base station, with the precoder type based on the UE capability information by higher layer signaling. The UE capability information may be precoder type information to be used by the UE in PUSCH transmission (which may be indicated, for example, by an RRC parameter "pusch-TransCoherence").

The UE may determine a precoder to be used for the PUSCH transmission, based on precoder type information (for example, an RRC parameter "codebookSubset") included in PUSCH configuration information notified by higher layer signaling (for example, "PUSCH-Config" information element of RRC signaling). The UE may be configured with a subset of a PMI specified by the TPMI, by codebookSubset.

Note that the precoder type may be specified by any of or a combination of at least two of full coherent (fully coherent), partial coherent, and non-coherent (non coherent) (which may be indicated, for example, by a parameter such as "fullyAndPartialAndNonCoherent" or "partialAndNonCoherent."

For example, the RRC parameter "pusch-TransCoherence" indicating a UE capability may indicate full coherent, partial coherent, or non-coherent (nonCoherent). The RRC parameter "codebookSubset" may indicate "fullyAndPartialAndNonCoherent," "partialAndNonCoherent," or "nonCoherent."

Full coherent may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, the precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

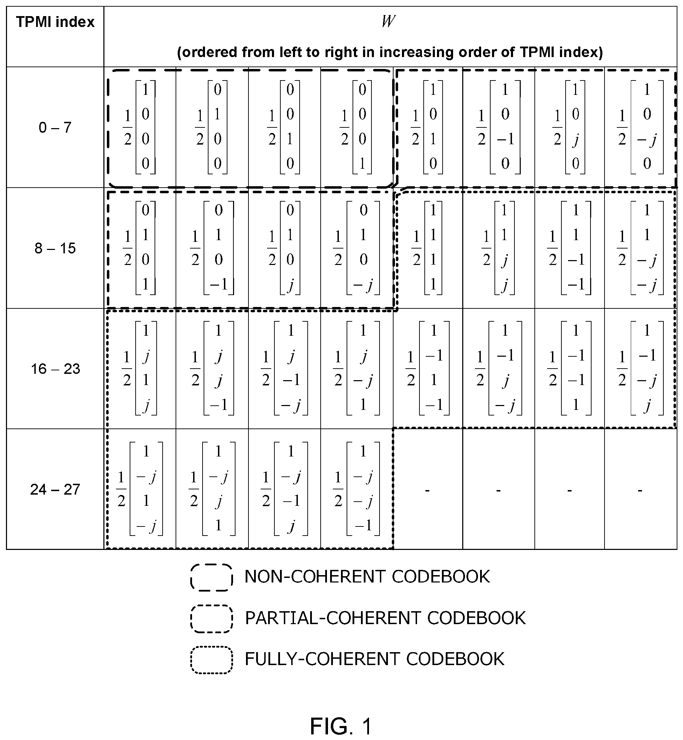

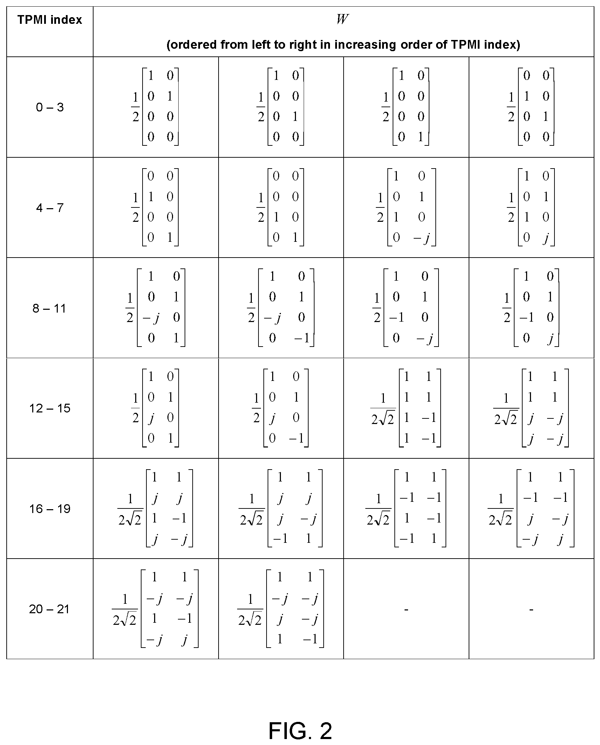

FIG. 1 is a diagram to show an example of association between codebook subsets and TPMI indices. FIG. 1 corresponds to a table of precoding matrices W for single-layer (rank 1) transmission using 4 antenna ports in Rel-16 NR in a case where transform precoding (which may be referred to as a transform precoder) is disabled. FIG. 1 shows corresponding W ordered from left to right in increasing order of TPMI indices (the same also applies to FIG. 2).

Such correspondence (which may be referred to as a table) indicating W corresponding to TPMI indices as that shown in FIG. 1 is also referred to as a codebook. Part of this codebook is also referred to as a codebook subset.

In FIG. 1, in a case where the codebook subset (codebookSubset) is fullyAndPartialAndNonCoherent, the UE is notified of a TPMI (TPMI index) of any one of 0 to 27, for single-layer transmission. In a case where the codebook subset is partialAndNonCoherent, the UE is configured with a TPMI of any one of 0 to 11, for single-layer transmission. In a case where the codebook subset is nonCoherent, the UE is configured with a TPMI of any one of 0 to 3, for single-layer transmission.

In FIG. 1, when TPMIs of 0 to 3 are notified, non-coherent precoders are applied. When TPMIs of 4 to 11 are notified, partial-coherent precoders are applied. When TPMIs of 12 to 27 are notified, full-coherent precoders are applied.

FIG. 2 to FIG. 4 correspond to respective tables of precoding matrices W for 2 to 4-layer (rank 2 to 4) transmissions in Rel-16 NR using 4 antenna ports in a case where transform precoding is disabled.

According to FIG. 2, a TPMI notified to the UE for 2-layer transmission is from 0 to 21 (codebook subset is fullyAndPartialAndNonCoherent), from 0 to 13 (codebook subset is partialAndNonCoherent), or from 0 to 5 (codebook subset is nonCoherent).

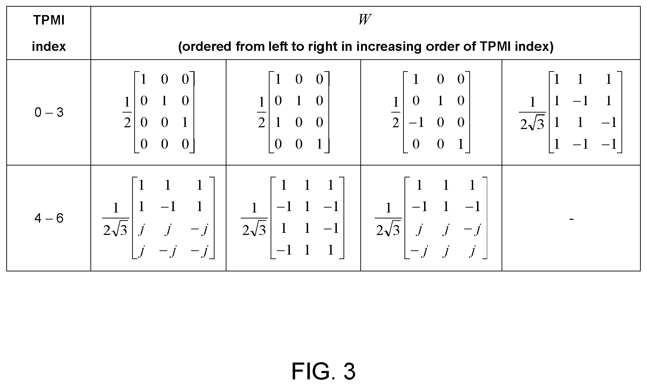

According to FIG. 3, a TPMI notified to the UE for 3-layer transmission is from 0 to 6 (codebook subset is fullyAndPartialAndNonCoherent), from 0 to 2 (codebook subset is partialAndNonCoherent), or 0 (codebook subset is nonCoherent).

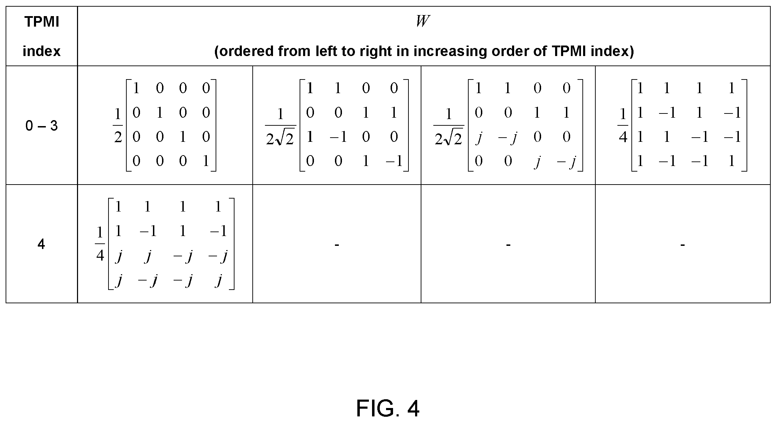

According to FIG. 4, a TPMI notified to the UE for 4-layer transmission is from 0 to 4 (codebook subset is fullyAndPartialAndNonCoherent), from 0 to 2 (codebook subset is partialAndNonCoherent), or 0 (codebook subset is nonCoherent).

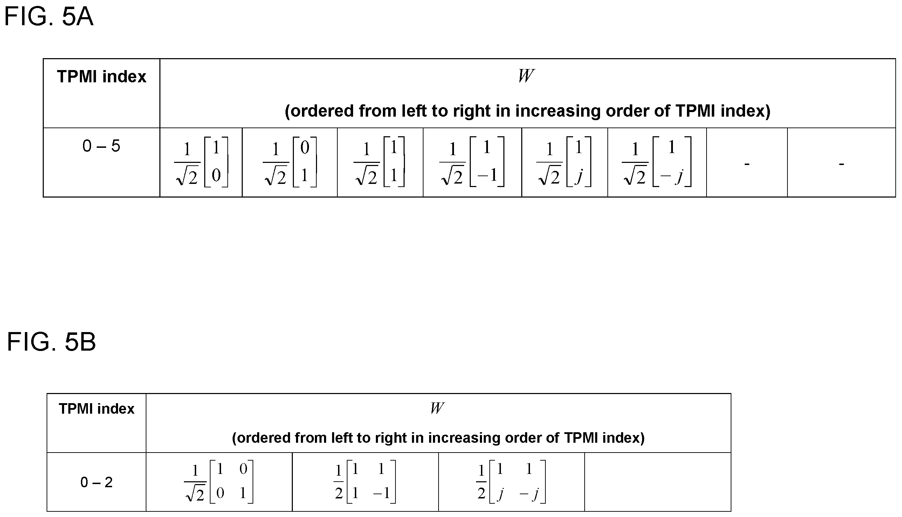

FIG. 5A corresponds to a table of precoding matrices W for single-layer (rank 1) transmission using 2 antenna ports in Rel-16 NR. FIG. 5B corresponds to a table of precoding matrices W for 2-layer (rank 2) transmission in Rel-16 NR using 2 antenna ports in a case where transform precoding is disabled.

According to FIG. 5A, a TPMI notified to the UE for 2-port single-layer transmission is from 0 to 5 (codebook subset is fullyAndPartialAndNonCoherent) or from 0 to 1 (codebook subset is nonCoherent). When the notified TPMI is from 0 to 1, a non-coherent precoder is applied. When the notified TPMI is from 2 to 5, a full-coherent precoder is applied.

According to FIG. 5B, a TPMI notified to the UE for 2-port 2-layer transmission is from 0 to 2 (codebook subset is fullyAndPartialAndNonCoherent) or 0 (codebook subset is nonCoherent).

Note that a precoding matrix in which only one element in each column is non-zero may be referred to as a non-coherent codebook. A precoding matrix in which a specific number of elements in each column (which is greater than 1, but is not the number of all the elements in each column) is non-zero may be referred to as a partial-coherent codebook. A precoding matrix in which all the elements in each column are non-zero may be referred to as a full-coherent codebook.

The non-coherent codebook and the partial-coherent codebook may be referred to as an antenna selection precoder, an antenna port selection precoder, or the like. For example, the non-coherent codebook (non-coherent precoder) may be referred to as a 1-port selection precoder, a 1-port port selection precoder, or the like. The partial-coherent codebook (partial-coherent precoder) may be referred to as an x-port (x is an integer greater than 1) selection precoder, an x-port port selection precoder, or the like. The full-coherent codebook may be referred to as a non-antenna selection precoder, a full-port precoder, or the like. In the present disclosure, a codebook, a codebook subset, and a precoder may be interchangeably interpreted.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the full-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a full-coherent codebook subset (for example, the RRC parameter "codebookSubset" = "fullyAndPartialAndNonCoherent").

Note that, as can be seen from FIG. 5A and FIG. 5B, there is no partial-coherent precoder for 2-antenna port transmission, and thus a configuration with a codebook subset being partialAndNonCoherent may not be applied to 2 antenna ports.

### (Precoding Information Field)

As described above, the UE may judge, based on a precoding information field of DCI for scheduling a PUSCH (for example, DCI format 0_1/0_2), a TPMI and the number of layers (transmission rank) for the PUSCH.

For a codebook based PUSCH, the number of bits of the precoding information field may be judged (may vary) based on configuration of enabling or disabling of a transform precoder for the PUSCH (for example, a higher layer parameter "transformPrecoder"), configuration of a codebook subset for the PUSCH (for example, a higher layer parameter "codebookSubset"), configuration of a maximum number of layers for the PUSCH (for example, a higher layer parameter "maxRank"), configuration of uplink full-power transmission for the PUSCH (for example, a higher layer parameter "ul-FullPowerTransmission"), the number of antenna ports for the PUSCH, and the like.

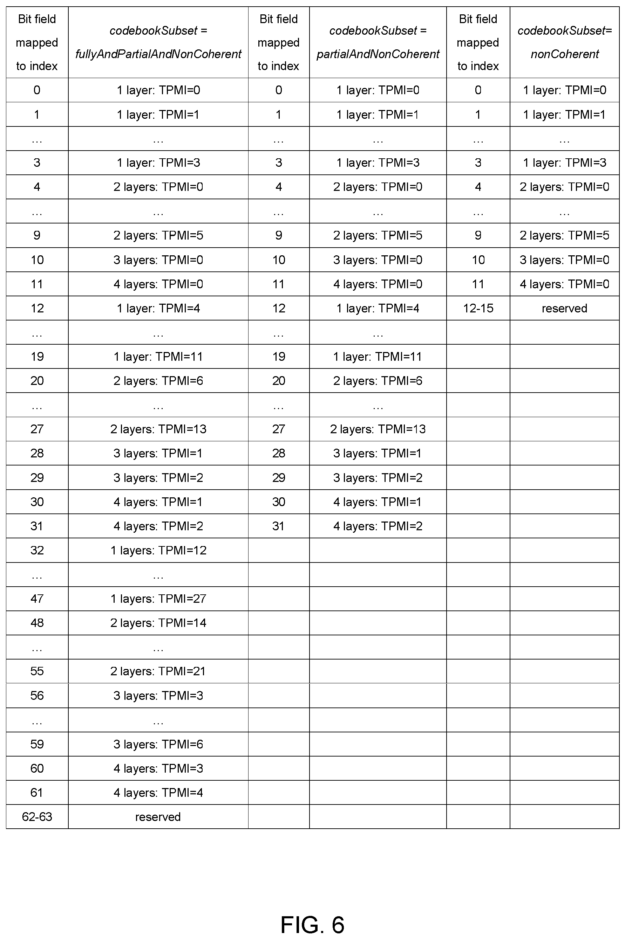

FIG. 6 is a diagram to show an example of correspondence between a value of the precoding information and number of layers field, and the number of layers and a TPMI in Rel-16 NR. The correspondence of the present example is correspondence for 4 antenna ports in a case where the transform precoder is configured as disabled, the maximum rank (maxRank) is set to 2, 3, or 4, and the uplink full-power transmission is not configured, full-power mode 2 (fullpowerMode2) is configured, or full power (fullpower) is configured, but is not restrictive. Note that it will be readily apparent to those of ordinary skill in the art that "Bit field mapped to index" illustrated indicates a value of the precoding information and number of layers field.

In FIG. 6, the precoding information field is 6 bits when the UE is configured with a full-coherent (fullyAndPartialAndNonCoherent) codebook subset, is 5 bits when the UE is configured with a partial-coherent (partialAndNonCoherent) codebook subset, and is 4 bits when the UE is configured with a non-coherent (nonCoherent) codebook subset.

Note that, as shown in FIG. 6, the number of layers and a TPMI corresponding to a certain value of the precoding information field may be the same (common) irrespective of a codebook subset configured to the UE. For example, in FIG. 6, the numbers of layers and TPMIs indicated by values = 0 to 11 of the precoding information field may be the same for full-coherent (fullyAndPartialAndNonCoherent), partial-coherent (partialAndNonCoherent), and non-coherent (nonCoherent) codebook subsets. In FIG. 6, the numbers of layers and TPMIs indicated by values = 0 to 31 of the precoding information field may be the same for full-coherent (fullyAndPartialAndNonCoherent) and partial-coherent (partialAndNonCoherent) codebook subsets.

Note that the precoding information field may be 0 bits for a non-codebook based PUSCH. The precoding information field may be 0 bits for a 1-antenna port codebook based PUSCH.

### (SRS Configuration for Codebook Based PUSCH)

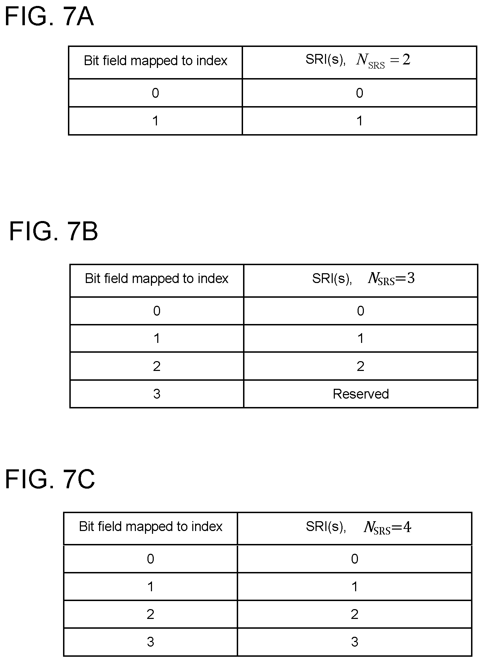

FIG. 7A is a diagram to show SRI indication or second SRI indication for codebook based PUSCH transmission in Rel. 17 in a case where ul-FullPowerTransmission is not configured or a case where ul-FullPowerTransmission = fullpowerMode1, ul-FullPowerTransmission = fullpowerMode2, or ul-FullPowerTransmission = fullpower, and N_{SRS} = 2. FIG. 7B is a diagram to show SRI indication or second SRI indication for codebook based PUSCH transmission in Rel. 17 in a case where ul-FullPowerTransmission = fullpowerMode2 and N_{SRS} = 3. FIG. 7C is a diagram to show SRI indication or second SRI indication for codebook based PUSCH transmission in Rel. 17 in a case where ul-FullPowerTransmission = fullpowerMode2 and N_{SRS} = 4.

The SRI indication corresponds to an SRS resource indicator field of DCI, and the second SRI indication corresponds to a Second SRS resource indicator field of the DCI. An SRS resource set indicator field is 2 bits when txConfig = nonCodeBook and two SRS resource sets configured by srs-ResourceSetToAddModList and associated with "nonCodeBook" usage are present, or when txConfig = codeBook and two SRS resource sets configured by srs-ResourceSetToAddModList and associated with "codeBook" usage are present. Otherwise, the SRS resource set indicator field is 0 bits.

When the higher layer parameter "txConfig" = codebook, the SRS resource indicator field is [log₂(N_{SRS})] bits, according to FIG. 7A to FIG. 7C. NS_{RS} is the number of configured SRS resources in an SRS resource set indicated by the SRS resource set indicator field (if any). Otherwise, N_{SRS} is the number of configured SRS resources associated with a higher parameter "usage" with a value 'codeBook,' in an SRS resource set configured by a higher layer parameter "srs-ResourceSetToAddModList."

For the codebook based transmission, a PUSCH is scheduled by DCI format 0_0, DCI format 0_1, DCI format 0_2, or is configured semi-fixedly. Only one or two SRS resource sets can be configured in SRS-ResourceSetToAddModList with a higher layer parameter, usage "codebook," of SRS-ResourceSet. Only one or two SRS resource sets can be configured in srs-ResourceSetToAddModListDCI-0-2 with a higher layer parameter, usage "codebook," of SRS-ResourceSet.

When, in srs-ResourceSetToAddModList or srs-ResourceSetToAddModListDCI-0-2, two SRS resource sets are configured with the higher layer parameter "usage" of SRS-ResourceSet being configured as "codebook," one or two SRIs and one or two TPMIs are given by two SRS resource indication fields and two precoding information fields, respectively.

The UE applies the indicated SRI(s) and TPMI(s) to one or more PUSCH repetitions, according to an SRS resource set associated with PUSCH repetitions. When two SRS resource sets are configured with SRS-ResourceSetToAddModList or srs-ResourceSetToAddModListDCI-0-2, and the higher layer parameter "usage" of SRS-ResourceSet is configured as "codebook," the UE does not expect that different numbers of SRS resources are configured in the two SRS resource sets.

In the codebook based transmission, only one SRS resource may be indicated among an SRS resource set, based on an SRI. Except when the higher layer parameter "ul-FullPowerTransmission" is configured as "fullpowerMode2," a maximum number of configured SRS resources for the codebook based transmission is 2. When the UE is configured with an aperiodic SRS, an SRS request field of the DCI triggers transmission of an aperiodic SRS resource.

Except when the higher layer parameter "ul-FullPowerTransmission" is configured as "fullpowerMode2," when SRS-ResourceSet configures a plurality of SRS resources for "codebook," the UE expects that a higher layer parameter "nrofSRS-Port" of SRS-Resource in SRS-ResourceSet is configured as the same value for all these SRS resources.

When the higher layer parameter "ul-FullPowerTransmission" is configured as "fullpowerMode2," (1) to (3) below are applied.
(1) The UE can configure, in an SRS resource set whose usage is configured as "codebook," one SRS resource or a plurality of SRS resources with the same or different numbers of SRS ports.
(2) When a plurality of SRS resources are configured in an SRS resource set, up to two different spatial relations can be configured for all the SRS resources in an SRS resource set whose usage is configured as "codebook."
(3) Depending on a capability of the UE, an SRS resource set whose usage is configured as "codebook" supports up to two or four SRS resources.

For a normal codebook based PUSCH, one SRS resource set including two SRS resources with the same numbers of ports can be configured. For codebook based PUSCH repetitions (for multiple transmission/reception points (TRPs)), two respective SRS resource sets with the same numbers of SRS resources may be configured. For codebook based "fullpowerMode 2," one SRS resource set or SRS resources with the same or different numbers of ports can be configured.

### (Transmission With More Than 4 Antenna Ports)

Rel-15/16 NR supports uplink (UL) Multi Input Multi Output (MIMO) transmission with up to four layers. For future radio communication systems, it is studied that UL transmission with more than 4 layers is supported to achieve higher spectral efficiency. For example, for Rel-18 NR, up to 6-rank transmission using 6 antenna ports, up to 6 or 8-rank transmission using 8 antenna ports, and the like are under study.

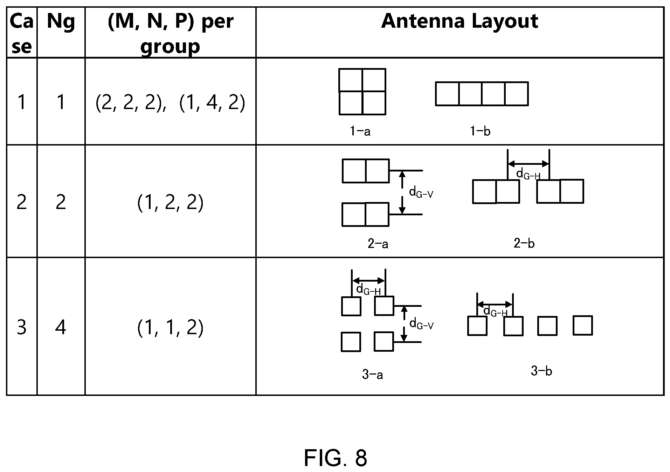

FIG. 8 is a diagram to show an example of an antenna layout of the eight antenna ports. Ng is the number of antenna groups. M is the number of antennas (or antenna elements) in a first dimension, and N is the number of antennas (or antenna elements) in a second dimension. The first dimension and the second dimension are, for example, a horizontal direction and a vertical direction, respectively. P is the number of polarized surfaces. P = 2 leads to a cross-polarized antenna.

The antenna group may be referred to as a coherent group. The coherent group may include one or more coherent ports. For example, a partial-coherent UE may include a plurality of coherent groups. Antenna ports in a coherent group may be coherent with each other. Antenna ports in different coherent groups may not be coherent with each other.

Each coherent group may correspond to a different transmission panel/transmission chain (Tx chain)/SRS resource set/RS resource set/spatial relation information (spatial relation info)/joint Transmission Configuration Indication state (joint TCI state)/UL TCI state/reception TRP. Here, the SRS resource set may correspond particularly to an SRS resource set for codebook or non-codebook usage. Each coherent group may correspond to a different reception TRP. The coherent group may be referred to as a coherent antenna group, a port group, an antenna set, or the like.

The UE may report, as UE capability information, the number of supported antenna groups/pieces of antenna layout information/coherences. The UE may be configured with coherent groups (for example, the number of coherent groups, the number of ports included in each coherent group), by higher layer signaling.

Note that the antenna layout is not limited to the example shown in FIG. 8. For example, the number of panels on which antennas are arranged, directions of the panels, coherency of each panel/antenna (full coherent, partial coherent, non-coherent, or the like), an antenna layout in a specific direction (such as a horizontal or vertical direction), and a polarized antenna configuration (single polarization, cross polarization, the number of polarized surfaces, or the like) may be different from those of the examples of FIG. 7A and FIG. 7B. dG-H and dG-V represent a horizontal spacing and a vertical spacing each between centers of adjacent antenna groups, respectively.

Rel-15/16 NR supports transmission of one codeword (CW) in one PUSCH, while for Rel-18 NR, it is studied that a UE transmits more than one CW in one PUSCH. For example, support of transmission of 2 CWs for ranks 5 to 8, support of transmission of 2 CWs for ranks 2 to 8, and the like are under study.

In UEs of Rel. 15 and Rel. 16, it is assumed that only one beam/panel is used for UL transmission at a certain time, but for Rel. 17 or later versions, it is studied that simultaneous UL transmissions (for example, PUSCH transmissions) with a plurality of beams/plurality of panels to one or more TRPs are performed to improve UL throughput and reliability. Note that the simultaneous PUSCH transmissions with the plurality of beams/plurality of panels may correspond to PUSCH transmissions with more than four layers, or may correspond to PUSCH transmissions with four or less layers.

A precoding matrix for UL transmission using more than four antenna ports (the number of antenna ports more than four) is also under study. For example, a codebook for 8-port transmission (which may be referred to as an 8-transmission UL codebook (8 TX UL codebook) or the like) is under study.

### (SRS Resource Configuration for Codebook Based PUSCH Transmission)

For example, in Rel-18 single-TRP transmission, one SRS resource set whose usage is set to a codebook can be configured. Except for full power mode 2, two SRS resources can be configured for the SRS resource set (per SRS resource set).

In multi-TRP transmission, two SRS resource sets whose usage is set to a codebook can be configured. Except for full power mode 2, two SRS resources can be configured for each SRS resource set (per SRS resource set).

When a plurality of SRS resources are configured for (one) SRS resource set, a precoder for codebook based transmission corresponds to an SRS resource selected by an SRI field.

When a single (one) SRS resource is configured for (one) SRS resource set (not including the SRI field), a precoder for codebook based transmission corresponds to the SRS resource.

In single-TRP transmission, one SRI field is indicated in the DCI. In multi-TRP transmission, two SRI fields are indicated in the DCI.

Here, the number of bits of the SRI field is represented by ceil(log₂(N_{SRS})). NS_{RS} is the number of SRS resources in (included in) the SRS resource set. Note that, in the present disclosure, ceil(X) may mean multiplexing X by a ceiling function.

For example, assuming that, in DCI format 0_2, N_{SRS,0_2} SRS resources are configured for one SRS resource set, the SRS resource set for DCI format 0_2 is configured with (includes) the first N_{SRS,0_2} SRS resources of an SRS resource set configured for DCI format 0_1.

For example, FIG. 7A described above can be referred to as a table of SRI indications for codebook based PUSCH transmission in an existing specification. FIG. 7A shows a case where UL full power transmission (ul-FullPowerTransmission) is not configured, a case where full power mode 2 is configured (ul-FullPowerTransmission = fullpowerMode2), or a case where UL full power transmission is configured (ul-FullPowerTransmission = fullpower) and where N_{SRS} = 2.

Incidentally, there can also be a case where Rel. 19 or later versions does not support the uplink (UL) full-power transmission described above and does not include SRS reinforcement/enhancement. For this case, it is studied to define a non-coherent UL codebook (non-coherent codebook for UL) in order to easily implement codebook-based transmission using three antenna ports (3-antenna-port codebook-based transmission).

In this way, a new codebook for a 3TX UE is under study. In a new codebook-based PUSCH for the 3TX UE (including, for example, a configured grant (CG) PUSCH, a dynamic grant (DG) PUSCH), up to two (i.e., one or two) SRS resources (SRS resources using three antenna ports) can be configured for one SRS resource set.

For example, existing specifications do not support an SRS using three antenna ports (which may be referred to as a 3-port SRS), and also do not support reinforcement/enhancement of the SRS. Thus, SRS configuration described in the following options may be considered for codebook based 3-layer transmission (3Tx for usage = 'codebook'). In other words, the UE may control SRS transmission, according to at least one of the following options.

### {Option 1}

Up to two (i.e., one or two) SRS resources (SRS resources using four antenna ports) may be configured for one SRS resource set. Here, which three of the four antenna ports are actually used and correspond to antenna ports for TPMI indication may be predefined by a specification (for example, antenna ports 0 to 2 for an SRS correspond to antenna ports 0 to 2 with TPMIs (TPMI = 0 to 2)) or may be configured in an SRS configuration.

In this case, even if an SRS using four antenna ports is configured, the UE transmits the SRS by using 3TX (three SRS antenna ports 0 to 2) for the configuration (4-port SRS configuration).

In other words, in this case, even when an SRS using four antenna ports is configured, the UE may control transmission of an SRS (PUSCH) by assuming that an SRS using three antenna ports is configured.

### {Option 2}

A 3-port SRS resource (SRS resources using three antenna ports) may mean one given 1-port SRS (SRS corresponding to one antenna port) and two other 2-port SRSs (SRS corresponding to two antenna ports). Here, which antenna port the three ports (three antenna ports) correspond to for TPMI indication may be predefined by a specification (for example, a 1-port SRS corresponds to antenna port 0 with a TPMI and a 2-port SRS corresponds to antenna ports 1 and 2 with TPMIs, or a 2-port SRS corresponds to antenna ports 0 and 1 with TPMIs and a 1-port SRS corresponds to antenna port 2 with a TPMI), may be configured in SRS configuration, or may be dynamically indicated by a new field in DCI.

### {Option 3}

A 3-port SRS resource (SRS resources using three antenna ports) may mean three 1-port SRSs (SRS corresponding to one antenna port). Here, which antenna port the three ports (three antenna ports) correspond to for TPMI indication may be predefined by a specification (for example, a first 1-port SRS corresponds to antenna port 0 with a TPMI, a second 1-port SRS corresponds to antenna port 1 with a TPMI, and a third 1-port SRS corresponds to antenna port 2 with a TPMI), may be configured in SRS configuration, or may be dynamically indicated by a new field in DCI.

### (PTRS)

In Rel-15 NR, a phase tracking reference signal (PTRS) is supported. A base station may transmit a PTRS in downlink. In a certain number of (for example, one) subcarrier(s), the base station may transmit PTRSs mapped continuously or discontinuously in the time direction.

A UE may receive a PTRS in, for example, at least part of a period (such as slot or symbol) where a downlink shared channel (Physical Downlink Shared Channel (PDSCH)) is scheduled (in other words, a period to receive the PDSCH). The PTRS transmitted by the base station may be referred to as a DL PTRS.

The UE may transmit a PTRS in uplink. In a certain number of (for example, one) subcarrier(s), the UE may transmit PTRSs mapped continuously or discontinuously in the time direction.

The UE may transmit a PTRS in, for example, at least part of a period (such as slot or symbol) where an uplink shared channel (Physical Uplink Shared Channel (PUSCH)) is scheduled (in other words, a period to transmit the PUSCH). The PTRS transmitted by the UE may be referred to as a UL PTRS.

The base station or UE may determine, based on a received PTRS, phase noise and correct a phase error of a received signal (for example, PUSCH or PDSCH).

The UE may be configured with PTRS configuration information (PTRS-DownlinkConfig for DL or PTRS-UplinkConfig for UL), by using higher layer signaling. For example, the PTRS configuration information may be included in configuration information (DMRS-DownlinkConfig or DMRS-UplinkConfig) of a demodulation reference signal (DMRS) for a PDSCH or PUSCH.

### (PTRS and DMRS)

In NR (for example, Rel. 15), it is assumed that a DMRS port associated with a PTRS port is QCL in terms of QCL types A and D. In other words, when a certain PTRS port is associated with a certain DMRS port, the PTRS port and DMRS port may be assumed to be in relationship of QCL types A and D with each other.

In Rel-16 NR, it is supported that association between a PTRS port and a DMRS port (for example, PTRS-DMRS association) is indicated by a certain field in DCI. The certain field may be referred to as an association-between-PTRS-and-DMRS field or a PTRS-DMRS related field (for example, PTRS-DMRS association field).

For Rel-16 NR, it is agreed to support up to two PTRS ports (first PTRS port and second PTRS port), for single-PDCCH-based multi-panel/TRP transmission. The number of PTRS ports applied/configured (for example, one or two PTRS ports) may be notified to a UE by using a higher layer parameter.

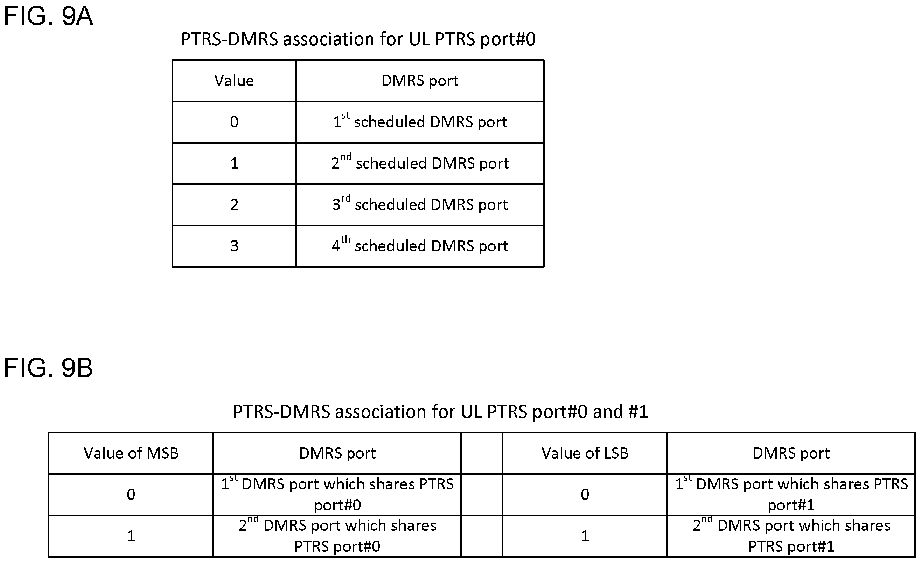

In a case where one PTRS port (for example, PTRS port #0) is configured, association between the PTRS and DMRSs may be determined based on codepoints specified by a PTRS-DMRS association field in DCI and on a correspondence relation (for example, table) between the codepoints and DMRS ports. The correspondence relation (for example, table) between the codepoints and DMRS ports may be defined in advance (see FIG. 9A).

FIG. 9A shows a case where, to the codepoints (here, 0 to 3) in the PTRS-DMRS association field, certain DMRS ports correspond (here, first to fourth scheduled DMRS ports respectively corresponds).

In a case where two PTRS ports (for example, PTRS port #0 and PTRS port #1) are configured, association between each PTRS and DMRSs may be determined based on codepoints specified by a PTRS-DMRS association field in DCI and on a correspondence relation (for example, table) between the codepoints and DMRS ports. The correspondence relation (for example, table) between the codepoints and DMRS ports may be defined in advance (see FIG. 9B).

For example, part of a plurality of codepoints (for example, most significant bit (MSB) may be used for specification of DMRS ports for PTRS port #0, and the rest of the codepoints (for example, least significant bit (LSB) may be used for specification of DMRS ports for PTRS port #1.

FIG. 9B shows a case where a first DMRS out of DMRSs sharing PTRS #0 is specified when the MSB (here, one bit) is "0" and a second DMRS out of the DMRSs sharing PTRS #0 is specified when the MSB is "1." In addition, a case is shown where a first DMRS out of DMRSs sharing PTRS #1 is specified when the LSB (here, one bit) is "0" and a second DMRS out of the DMRSs sharing PTRS #1 is specified when the LSB is "1."

Information related to DMRSs (for example, first DMRS/second DMRS) sharing each PTRS (here, PTRS #0 or #1) may be defined in advance in a specification or may be explicitly or implicitly notified, to a UE, from a base station by DCI/RRC.

For example, a PUSCH antenna port corresponding to each PTRS port may be defined/configured in advance and certain information related to a correspondence relation between the PUSCH antenna port and a DMRS port may be notified to a UE by DCI/RRC. Based the information related to the correspondence relation between the DMRS port and the PUSCH antenna port notified from the base station and on the correspondence relation between the PUSCH antenna port and the PTRS port defined in advance, the UE may judge association between the DMRS port and the PTRS port.

The certain information related to the correspondence relation between the PUSCH antenna port and the DMRS port may be indicated to the UE by using a certain field included in DCI (for example, DCI used for scheduling of a PUSCH). The certain field may be at least one of a precoding-information-and-number-of-layers field ("Precoding information and number of layers" field) and an antenna port field ("Antenna ports" field).

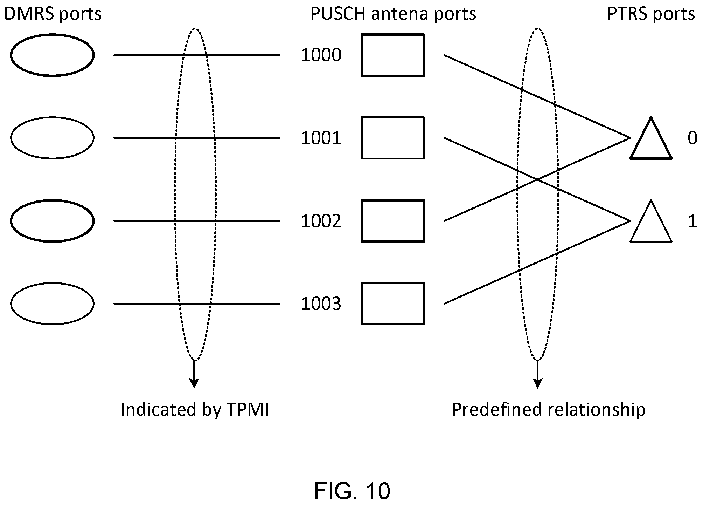

For example, it may be defined that PUSCH antenna ports 1000 and 1002 in an indicated transmitted precoding matrix indicator (TPMI) share PTRS port #0 and PUSCH antenna ports 1001 and 1003 in the indicated TPMI share PTRS port #1. The TPMI may be specified by the precoding-information-and-number-of-layers field ("Precoding information and number of layers" field) in the DCI (see FIG. 10).

PTRS port #0 may be associated with UL layer 'x' of a plurality of layers transmitted with the PUSCH antenna port 1000 and PUSCH antenna port 1002 in the indicated TPMI. PTRS port #1 may be associated with UL layer "y" of a plurality of layers transmitted with the PUSCH antenna port 1001 and PUSCH antenna port 1003 in the indicated TPMI. x/y may be given by the PTRS-DMRS association field included in the DCI (for example, FIG. 9B).

It may be defined in a specification that the PUSCH antenna ports 1000 and 1002 share PTRS port #0 and the PUSCH antenna ports 1001 and 1003 share PTRS port #1. Certain information (hereinafter, also simply referred to as "TPMI") from the base station may indicate which layer/DMRS port is to be transmitted with which PUSCH antenna port. This means that the TPMI indicates which layer/DMRS port shares which PTRS port. The PTRS-DMRS association field may indicate that one layer/DMRS port from among a plurality of layers/DMRS ports shares a PTRS port.

### (SRS Transmission Power Control)

By using index l of a power control adjustment state (closed-loop state), the transmission power for an SRS (P_{SRS,b,f,c} (i, qₛ, 1)) in an SRS transmission occasion (also referred to as a transmission period or the like) i for the active UL BWP b in the carrier f of the serving cell c is given by the following equation, based on P_{CMAX,f,c}(i), P_{O_SRS,b,f,c}(qₛ), M_{SRS,b,f,c}(i), α_{SRS,b,f,c}(qₛ), PL_{b,f,c}(q_{d}) , and h_{b,f,c}(i, l). $\begin{matrix}{P}_{SRS , b , f , c} \left(i, {q}_{s}, l\right) \\ = min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) \\ + {α}_{SRS , b , f , c} \left({q}_{s}\right) ⋅ {PL}_{b , f , c} \left({q}_{d}\right) + {h}_{b , f , c} \left(i, l\right)\end{matrix}\right\} \\ \left[dBm\right]\end{matrix}$ (1)

The SRS transmission occasion i is a period in which an SRS is transmitted, and may be constituted by, for example, one or more symbols, one or more slots, or the like.

Here, P_{CMAX,f,c}(i) is, for example, UE maximum output power for the carrier f of the serving cell c in the SRS transmission occasion i. P_{O_SRS,b,f,c}(qₛ) is a parameter related to target received power (for example, also referred to as a parameter related to a transmission power offset, a transmission power offset P0, a target received power parameter, or the like) provided by p0 for the active UL BWP b in the career f of the serving cell c and an SRS resource set qₛ (provided by SRS-ResourceSet and SRS-ResourceSetId).

M_{SRS,b,f,c}(i) is an SRS bandwidth expressed by the number of resource blocks for the SRS transmission occasion i on the active UL BWP b in the career f of the serving cell c with subcarrier spacing µ.

α_{SRS,b,f,c}(qₛ) is provided by α (for example, alpha) for the active UL BWP b in the carrier f of the serving cell c with the subcarrier spacing µ and the SRS resource set qₛ.

PL_{b,f,c}(q_{d}) is a DL pathloss estimate [dB] (pathloss estimation [dB], pathloss compensation) calculated by a UE by using an RS resource index q_{d}, for the active DL BWP in the serving cell c and the SRS resource set qₛ. The RS resource index q_{d} is a pathloss reference RS (provided by an RS for pathloss reference, a pathloss (PL)-RS, or a DL-RS for pathloss measurement, for example, pathlossReferenceRS) associated with the SRS resource set qₛ, and is an SS/PBCH block index (for example, ssb-Index) or a CSI-RS resource index (for example, csi-RS-Index).

If the UE is not given pathloss reference RSs (pathlossReferenceRSs) or before the UE is given a dedicated higher layer parameter, the UE calculates PL_{b,f,c}(q_{d}) by using an RS resource obtained based on an SS/PBCH block used for the UE to acquire an MIB.

h_{b,f,c}(i, l) is an SRS power control adjustment state for the active UL BWP in the carrier f of the serving cell c in the SRS transmission occasion i. When a configuration of the SRS power control adjustment state (for example, srs-PowerControlAdjustmentStates) indicates the same power control adjustment state for SRS transmission and PUSCH transmission, h_{b,f,c}(i, l) is the current PUSCH power control adjustment state f_{b,f,c}(i, l). On the other hand, when the configuration of the SRS power control adjustment state indicates independent power control adjustment states for SRS transmission and PUSCH transmission, SRS power control adjustment state h_{b,f,c}(i) may be based on δ_{SRS,b,f,c}(m).

When TPC accumulation is enabled, h_{b,f,c}(i) may be based on the accumulated value of δ_{SRS,b,f,c}(m).

When the TPC accumulation is disabled, h_{b,f,c}(i) may be δ_{SRS,b,f,c}(i) (an absolute value).

Here, δ_{SRS,b,f,c}(m) may be a TPC command value coded by being combined with another TPC command in a PDCCH including DCI (for example, DCI format 2_3). Σₘ₌₀^{C(Si)-1}δ_{SRS,b,f,c}(m) may be the sum of TPC commands in set Sᵢ of TPC command values with cardinality C (Sᵢ) received by the UE between timing K_{SRS}(i-i₀)-1 symbols before an SRS transmission occasion i-i₀ and timing K_{SRS}(i) symbols before an SRS transmission occasion i, on the active UL BWP b in the carrier f of the serving cell c with the subcarrier spacing µ. Here, i₀ may be the lowest positive integer that causes the timing K_{SRS}(i-i₀)-1 symbols before the SRS transmission occasion i-i₀ to be earlier than the timing K_{SRS}(i) symbols before the SRS transmission occasion i.

If SRS transmission is aperiodic, K_{SRS}(i) may be the number of symbols in the active UL BWP b in the carrier f of the serving cell c after the last symbol for a corresponding PDCCH for triggering the SRS transmission and before the first symbol for the SRS transmission. If the SRS transmission is semi-persistent or periodic, K_{SRS}(i) may be the number of K_{SRS,min} symbols equal to the product of the number N_{symb}^{slot} of symbols per slot in the active UL BWP b in the carrier f of the serving cell c and a minimum value of a value provided by k2 in PUSCH-common configuration information (PUSCH-ConfigCommon).

In Rel. 15/16, P0 and α for one closed-loop (CL) state index are configured by RRC.

In Rel. 17, when TCI-State is provided in dl-OrJointTCI-StateList or TCI-UL-State, P0 and α for one closed-loop (CL) state index follow the following:
- When followUnifiedTCIstateSRS (configuration of an SRS following a unified TCI state) is provided, they are given by p0AlphaSetforSRS associated with indicated TCI-State or indicated TCI-UL-State.
- Instead, when followUnifiedTCIstateSRS is not provided, they are given by p0AlphaSetforSRS associated with TCI-State or TCI-UL-State of an SRS resource with lowest SRS-ResourceId in an SRS resource set.

In Rel. 15/16, a PL-RS is given by pathlossReferenceRS associated with SRS resource set qₛ. When pathlossReferenceRS is not provided, the UE uses, for path loss calculation, an RS resource obtained from an SS/PBCH block with the same SS/PBCH block index as an SS/PBCH block index of an SS/PBCH block used for obtaining an MIB (uses it as RS resource index q_{d} for path loss PL, uses it as a PL-RS). When neither pathlossReferenceRS nor spatialRelationInfo is provided, and enableDefaultBeamPL-ForSRS is configured, the UE uses a default RS for pathloss calculation (uses it as RS resource index q_{d} for path loss PL, uses it as a PL-RS). An index of the default RS provides a periodic RS resource configured with qcl-Type set to 'typeD' in the following TCI state or QCL assumption:
- When a CORESET is provided in an active DL BWP of the serving cell c, a TCI state or QCL assumption of a CORESET with the lowest index in the active DL BWP.
- When the CORESET is not provided in the active DL BWP of the serving cell c, an active PDSCH TCI state with the lowest ID in the active DL BWP.

In Rel. 17, when TCI-State is provided in dl-OrJointTCI-StateList (list of DL or joint TCI states) or TCI-UL-State (UL TCI state), the PL-RS follows the following:
- When followUnifiedTCIstateSRS is provided, a TCI state applied, the TCI state being indicated TCI-State or indicated TCI-UL-State from a set of configured TCI-States or indicated TCI-UL-States.
- Otherwise, the same RS as the PL-RS in Rel. 15/16 above.

### (Maximum Transmission Power (P_{CMAX}))

Maximum transmission power P_{CMAX} is defined for each case of FR1, FR2, and interoperation (for example, EN-DC). For example, P_{CMAX} is applied in each case of a single carrier, CA, and DC. For example, for a case of a single carrier in FR1, P_{CMAX} is defined as the following equation. $\begin{matrix}{P}_{CMAX_L , f , c} \leq {P}_{CMAX , f , c} \leq {P}_{CMAX_H , f , c} with \\ {P}_{CMAX_L , f , c} = MIN \left\{\begin{matrix}{P}_{EMAX , c} - {ΔT}_{C , c} , \\ \left({P}_{PowerClass}-{ΔP}_{PowerClass}\right) \\ - MAX \left(MAX\left({MPR}_{c}+Δ{MPR}_{c},A-{MPR}_{c}\right)+{ΔT}_{IB , c}+{ΔT}_{C , c}+{ΔT}_{RxSRS},P-{MPR}_{c}\right)\end{matrix}\right\} \\ {P}_{CMAX_H , f , c} = MIN \left\{{P}_{EMAX , c}, {P}_{PowerClass}-{ΔP}_{PowerClass}\right\}\end{matrix}$ (2)

The UE calculates P_{CMAX} by using Equation (2) above and transmits (reports) this P_{CMAX} to the base station (gNB) by using a PHR MAC CE. With this, the base station can recognize P_{CMAX} determined by the UE.

Each parameter will be described below.
P_{EMAX} is given by additionalPmax or p-Max information element in an RRC information element "NR-NS-PmaxList" (is configured by the base station).
P_{PowerClass} is maximum power of the UE specified in a specification, and is a parameter without consideration of an allowable error specified in the specification. This parameter is determined by the UE, and is known to the base station.
ΔP_{PowerClass} is a parameter indicating power adjustment of a high power UE based on a specific condition. This parameter is determined by the UE, and is known to the base station when the UE supports PC3.
ΔT_{IB,c} is an additional allowable value for the serving cell c with NR Carrier Aggregation (CA), Supplemental UpLink (SUL), or E-UTRA-NR Dual Connectivity (EN-DC). This parameter is defined in a specification.
MPR means maximum power reduction, and is used to limit UL transmission power.
A-MPR means additional maximum power reduction, and is used to limit UL transmission power. The sum of the maximum power reductions is max(MPR, A-MPR).
ΔMPR indicates the amount of change in the MPR.
ΔT_{RxSRS} is a parameter applied in SRS transmission when usage of SRS-ResourceSet is 'antennaSwitching.'
P-MPR means power management maximum power reduction. This parameter is used to certainly comply with an applied electromagnetic energy absorption requirement and to handle an unwanted emission/self-sense requirement when simultaneous transmission is performed on a plurality of Radio Access Technologies (RATs) in a scenario outside the range of the 3GPP RAN standard. This parameter is used to certainly comply with an applied electromagnetic energy absorption requirement when proximity detection is used to handle a requirement requiring lower maximum output power.

### (UE Sounding Procedure for DL CSI Acquisition)

In Rel-15 NR, antenna switching (which may be referred to as antenna port switching) can be configured as SRS usage, as described above. The SRS antenna switching may be used, for example, when CSI acquisition is performed by using an uplink SRS in a time division duplex (TDD) band.

For example, for a UE having a capability to have the number of antenna ports available for transmission less than the number of antenna ports available for reception, UL SRS measurement may be used to determine a DL precoder.

Note that the UE may report, to a network, UE capability information indicating an SRS transmission (Tx) port switching pattern to be supported (for example, supportedSRS-TxPortSwitch in an RRC parameter "srs-TxSwitch"). This pattern is expressed in a form "txry" such as "t1r2" and "t2r4," and this may mean that SRS transmission can be performed by using x antenna ports of a total of y antennas (which may be expressed as xTyR). Here, y may correspond to all or a subset of reception antennas of the UE.

Note that a case where x and y of "txty" are the same value may be expressed as xT = xR (for example, 4T = 4R).

For example, for DL CSI acquisition, the UE with 2T4R (2 transmission ports, 4 reception ports) may include two SRS resources each including two ports and may be configured with an SRS resource set for antenna switching usage.

UE capability information for SRS transmission switch (srs-TxSwitch) indicates whether an SRS for DL CSI acquisition (transmission antenna switching, SRS antenna switching) is supported. The UE capability information includes a parameter "supportedSRS-TxPortSwitch." "supportedSRS-TxPortSwitch" indicates an SRS transmission (Tx) port switching pattern supported by the UE. The SRS transmission port switching pattern is a mandatory function with capability signaling.

In the present disclosure, an SRS Tx port switching pattern and an SRS antenna switching configuration may be interchangeably interpreted.

A value of "supportedSRS-TxPortSwitch" may indicate 't1r2,' 't2r4,' 't1r4,' 't1r4-t2r4,' 't1r1,' 't2r2,' 't4r4,' and 'notsupported' for 1T2R, 2T4R, 1T4R, 1T4R/2T4R, 1T = 1R, 2T = 2R, 4T = 4R, and non-support, respectively.

A UE antenna switching capability for which xTyR ('txry') is indicated by "supportedSRS-TxPortSwitch" corresponds to the UE capable of performing SRS transmission on x antenna ports over a total of y antennas. y corresponds to all or subset of UE reception antennas. For example, 2T4R corresponds to two pairs of antennas.

supportedSRS-TxPortSwitch may report at least one of the following values.
- 't1r2'
- 't1r4'
- 't2r4'
- 't2r2'
- 't4r4'
- 't1r4-t2r4'

srs-TxSwitch may include txSwitchImpactToRx, txSwitchWithAnotherBand. txSwitchImpactToRx indicates the lowest band entry number of a UL group (see txSwitchWithAnotherBand below) that affects a DL of this band entry. txSwitchWithAnotherBand indicates the lowest band entry number of the UL group. The UL group is defined as band entries with ULs that affect the mutual ULs. In other words, SRS Tx port switching on any cell in the group affects ULs on all the cells in the group. This parameter is absent when the UL group includes only one band entry. In txSwitchImpactToRx and txSwitchWithAnotherBand, a value of 1 means the first entry, and a value of 2 means the second entry. Even when supportedSRS-TxPortSwitch is set to 'notSupported' for a band entry, the UE may include txSwitchImpactToRx and txSwitchWithAnotherBand in the band entry. All DLs and ULs to be jointly switched indicate the same entry number. The entry number is a band entry number in a band combination. The UE is restricted to not include a fallback band combination for the purpose of indicating different SRS switching capabilities. Bands including the ULs include a band associated with FeatureSetUplinkId corresponding to support of SRS-SwitchingTimeNR and set to 0.

When the UE is configured by using an SRS resource set (SRS-ResourceSet), and usage (a higher layer parameter "usage") in the SRS resource set is set to antenna switching ('antennaSwitching'), the UE does not assume that different spatial relations are configured for a plurality of SRS resources in the same SRS resource set.

When the UE is configured by using an SRS resource set (SRS-ResourceSet), and usage (a higher layer parameter "usage") in the SRS resource set is set to antenna switching ('antennaSwitching'), the UE may be configured with one of configurations 1 to 5 below, depending on indicated (reported) UE capability information (UE antenna switching capability information, UE capability information indicating an SRS transmission port switching pattern (SRS antenna switching configuration) supported by the UE, or supportedSRS-TxPortSwitch).

### {Configuration 1}

For 1T2R, up to two SRS resource sets configured with different values for a resource type (higher layer parameter "resourceType") in the SRS resource set. Each set has two SRS resources transmitted in different symbols, each SRS resource in a given set consists of a single SRS port, and an SRS port of a second resource in the set is associated with a UE antenna port different from an SRS port of a first resource in the same set.

### {Configuration 2}

For 2T4R, up to two SRS resource sets configured with different values for a resource type (higher layer parameter "resourceType") in the SRS resource set. Each SRS resource set has two SRS resources transmitted in different symbols, each SRS resource in a given set consists of two SRS ports, and an SRS port pair for a second resource in the set is associated with a UE antenna port pair different from an SRS port pair for a first resource in the same set.

### {Configuration 3}

For 1T4R, zero or one SRS resource set configured with a resource type (higher layer parameter "resourceType") in an SRS resource set having four SRS resources transmitted in different symbols, the SRS resource set being set to "periodic" or "semi-persistent." Each SRS resource in a given set consists of a single SRS port, and an SRS port of each resource is associated with a different UE antenna port.

### {Configuration 4}

For 1T4R, zero or two SRS resource sets configured with respective resource types (higher layer parameters "resourceType") in SRS resource sets having a total of four SRS resources transmitted in different symbols of two different slots, the SRS resource sets being set to "aperiodic." An SRS port of each SRS resource in two given sets is associated with a different UE antenna port. Each of the two sets is configured with two SRS resources, or one of the two sets is configured with one SRS resource, and the other is configured with three SRS resources. The UE assumes (expects) that both of the two sets are configured with the same value of a power control parameter (higher layer parameters "alpha," "p0," "pathlossReferenceRS," and "srs-PowerControlAdjustmentStates") in the SRS resource set. The UE assumes that values of parameters (higher layer parameters "aperiodicSRS-ResourceTrigger," parameters indicating codepoints of SRS request fields in DCI) in respective SRS resource sets are the same and that values of higher layer parameters "slotOffset" in the respective SRS resource sets are different from each other.

### {Configuration 5}

For 1T = 1R, 2T = 2R, or 4T = 4R, up to two SRS resources sets each having one SRS resource. The number of SRS ports of each resource is 1, 2, or 4.

When usage in the SRS resource set is set to antenna switching for the UE, the UE may be configured with an SRS antenna switching configuration, depending on reported UE capability information (supportedSRS-TxPortSwitch, supportedSRS-TxPortSwitch-v1610).

When an SRS resource of a given set is transmitted in the same slot as that for Y symbol(s), the UE is configured with a guard period of Y symbol(s) in which the UE does not transmit any other symbol. The guard period is present between SRS resources of the set.

If an indicated UE capability is 1T4R/2T4R, the UE assumes that the same number of SRS ports being 1 or 2 is configured for all the SRS resources in the SRS resource set.

If an indicated UE capability is 1T2R, 2T4R, 1T4R, or 1T4R/2T4R, the UE does not assume that more than one SRS resource set having usage (higher layer parameter "usage") set to antenna switching is configured or triggered in the same slot. If an indicated UE capability is 1T1R, 2T2R, or 4T4R, the UE does not assume that more than one SRS resource set having usage (higher layer parameter "usage") set to antenna switching is configured or triggered in the same symbol.

UE capability information for SRS transmission switch (srs-TxSwitch-v1610) may include a parameter "supportedSRS-TxPortSwitch-v1610." Reporting of the parameter is optional. "supportedSRS-TxPortSwitch-v1610" indicates downgrading configuration of an SRS transmission port switching pattern, and reporting thereof is optional. When indicating support of downgrading configuration of the SRS transmission port switching pattern by using "supportedSRS-TxPortSwitch-v1610," the UE may report at least one of the following values for indicating support of the downgrading configuration, based on content reported in "supportedSRS-TxPortSwitch."
- 't1r1-t1r2'
- 't1r1-t1r2-t1r4'
- 't1r1-t1r2-t2r2-t2r4'
- 't1r1-t2r2'
- 't1r1-t2r2-t4r4'
- 't1r1-t1r2-t2r2-t1r4-t2r4'

In the present disclosure, a downgrade configuration and an SRS Tx port switching pattern using antennas/ports less than a total number of antennas/number of all antennas/number of all Rx antennas/maximum number of Rx ports may be interchangeably interpreted.

Rel-17 UE capability signaling (srs-AntennaSwitchingBeyond4Rx-r17) indicates whether the UE supports SRS antenna switching for more than 4 Rxs. The capability signaling includes some parameters below.
- supportedSRS-TxPortSwitchBeyond4Rx-r17. It indicates a combination of xTyR supported. It is an 11-bit bitmap. The bitmap starts with the first/leftmost bit (bit 0). The respective bits correspond to {t1r1, t2r2, t1r2, t4r4, t2r4, t1r4, t2r6, t1r6, t4r8, t2r8, t1r8}. x in any indicated value is less than or equal to a value of x associated with largest y.
- entryNumberAffectBeyond4Rx-r17. It indicates, in a band combination affecting this DL, an entry number of the band first listed with a UL.
- entryNumberSwitchBeyond4Rx-r17. It indicates, in a band combination switched together with a UL, an entry number of the band first listed with this UL.

The UE indicating support of this capability indicates support of srs-TxSwitch.

When the same xYyR value as an xYyR value reported by using supportedSRS-TxPortSwitch/supportedSRS-TxPortSwitch-v1610 is reported in supportedSRS-TxPortSwitchBeyond4Rx-r17, reported values of entryNumberAffectBeyond4Rx-r17 and entryNumberSwitchBeyond4Rx-r17 are invalid.

In the present disclosure, an SRS transmission port switching pattern and an antenna switching SRS configuration may be interchangeably interpreted.

### (SRS Configuration for Antenna Switching)

For the above-described SRS configuration for xTyR, the following is supported for each release.

In Rel. 15/16, up to two SRS resource sets can be configured in a case of 1T2R, 2T4R, 1T4R, 1T4R/2T4R, or T = R.

In Rel. 17, different SRS resource sets can be configured for 1T6R, 1T8R, 2T6R, 2T8R, 4T8R.

For example, one periodic SRS resource set can be configured for 2T8R. The SRS resource set includes four SRS resources. Each SRS resource consists of two SRS ports. A pair of SRS ports of different SRS resources in the SRS resource set are associated with a pair of different UE antenna ports.

For 2T8R, one or two semi-persistent SRS resource sets or up to one periodic SRS resource set can be configured for a new UE capability. Each SRS resource set includes four SRS resources. Each SRS resource consists of two SRS ports. A pair of SRS ports of different SRS resources in the SRS resource set are associated with a pair of different UE antenna ports.

One to four aperiodic SRS resource sets can be configured for 2T8R. Each SRS resource set includes four SRS resources. Each SRS resource consists of two SRS ports. A pair of SRS ports of different SRS resources in the SRS resource set are associated with a pair of different UE antenna ports.

In Rel. 17, more SRS resource sets can be supported for 1T2R, 2T4R, 1T4R, 1T4R/2T4R, or T = R.

In Rel. 18, a plurality of SRS resource sets can be configured for 8T = 8R.

### (Studies for 3TX UL Transmission)

According to the above-described codebook for 3TX UE, one SRS resource set can include one 1-port SRS resource and one 2-port SRS resource (for example, as one 3-port SRS resource), or two 1-port SRS resources and two 2-port SRS resources (for example, as two 3-port SRS resources). In this case, one 3Tx PUSCH transmission precoder corresponds to one 1-port SRS resource and one 2-port SRS resource (case 1).

As another example, one SRS resource set can include three 1-port SRS resources (for example, as one 3-port SRS resource), or six 1-port SRS resources (for example, as two 3-port SRS resources). In this case, one 3Tx PUSCH transmission precoder corresponds to three 1-port SRS resources (case 2).

As described above, in 3Tx UL transmission, a non-coherent precoder is primarily considered. In the SRS resource configuration, as SRS resources capable of being configured for the one SRS resource set, 4-port SRS resources, {1, 2}-port SRS resources, {1, 1, 1}-port SRS resources, and the like are considered.

In such a case where a plurality of SRS resources are required for measurement of ports (sounding), the plurality of SRS resources may be FDMed (Frequency Division Multiplexed)/TDMed (Time Division Multiplexed).

Incidentally, regarding SRS transmission power control, a specification describes the following. Note that the description in the specification corresponds to performance by a terminal. Note that, in the following description, P⁻ represents a variable obtained by attaching an overline to P, and may also be referred to as P bar.

When the UE is provided with TDM for one 8-port SRS resource in one SRS resource set whose usage is configured as "codebook" or "antennaSwitching," the UE equally divides linear value P⁻_{SRS,b,f,c}(i, q_{S}, l) of transmission power P_{SRS,b,f,c}(i, q_{S}, l) among (a plurality of) antenna ports configured in each symbol for SRS transmission in the active UL BWPb in the carrier f of the serving cell c.

Otherwise, the UE equally divides linear value P⁻_{SRS,b,f,c}(i, q_{S}, l) of transmission power P_{SRS,b,f,c}(i, q_{S}, l) among (a plurality of) antenna ports configured for SRSs in the active UL BWPb in the carrier f of the serving cell c.

In other words, according to the above-described example description of the specification, the UE controls division of the transmission power among a plurality of antenna ports, depending on the number of ports of SRS resources, according to rules 1 to 2 below.

### (Rule 1)

For 8-port SRS resources TDMed, linear value P⁻_{SRS,b,f,c}(i, q_{S}, l) of transmission power P_{SRS,b,f,c}(i, q_{S}, l) is divided equally among (a plurality of) antenna ports configured in each symbol for SRS transmission.

### (Rule 2)

For another SRS resource, linear value P⁻_{SRS,b,f,c}(i, q_{S}, l) of transmission power P_{SRS,b,f,c}(i, q_{S}, l) is divided equally among (a plurality of) antenna ports configured for SRSs.

When the above rules are applied directly to a 3TX UE, the following problems may occur.

For example, in a case where a 4-port SRS resource is used, assuming rule 2 above, SRS transmission power per port is 1/4 of the total transmission power. However, for 3TX UL transmission, one of the four ports is technologically unnecessary. In this case, it may be assumed that the one unused port is not transmitted.

When {1, 2}-port SRS resources TDMed are used,
- according to rule 1, the SRS transmission power per port differs for each resource, and
- according to rule 2, the SRS transmission power per port is the same, but transmission power for 1-port SRS resource can be assumed to have a larger transmission power margin (power budget).

When {1, 1, 1}-port SRS resources TDMed are used, in both of rules 1 and 2, the transmission power per port can realize/achieve 1/3 of the total transmission power (distributed by 1/3 of the total transmission power).

In this way, when {1, 2}/{1, 1, 1}-port SRS resources TDMed are used, as long as the rules based on the existing specification are followed, total SRS transmission power in a given OFDM symbol can be interpreted as exceeding (over) actual available transmission power.

In other words, when the existing rules are applied directly to a 3TX UE, waste in transmission power per port is caused or unrealizable power (exceeding actual available transmission power) is configured, and appropriate transmission power control may fail.

### (Analysis 1)

Incidentally, the UE supporting 3TX needs to support SRS configuration for antenna switching as usage to acquire DL CSI. However, it is necessary to study how to support SRS configuration for antenna switching and a corresponding UE capability.

### (Analysis 2)

When a plurality of SRS resources are used in 3TX UL (PUSCH) transmission, it is required to achieve the same transmission power for all SRS ports.

As described above, for example, it is considered that {1, 2}-port SRS resource is treated as one existing SRS resource for 3TX SRS power control. In this case, the UE calculates one transmission power, based on an existing scheme, and then distributes the one transmission power to three ports.

In a case of TDM, the transmission power determined based on the existing scheme can be divided among a plurality of ports transmitted in one OFDM symbol. It is considered that, in order to achieve equal transmission power among ports, transmission power per minimum port among SRS ports is applied to all SRS ports.

In a case of FDM, in order to achieve equal transmission power among the ports, the transmission power determined based on the existing scheme can be divided by a total number of ports over all the SRS resources in the OFDM symbol.

As another method, it is considered that each of {1, 2}-port SRS resources is treated as (similarly to) one existing SRS resource for 3TX SRS power control.

For example, the UE calculates transmission power, based on the existing scheme, for each of the {1, 2}-port SRS resources. It is considered to realize equal transmission power among a plurality of ports, based on the transmission power.

More specifically, when 3TX PUSCH transmission is configured, and {1, 2}-port SRS resources are configured for sounding of a UL channel, transmission power for a 2-port SRS is configured to be twice that for a 1-port SRS. Then, by dividing the transmission power for the 2-port SRS by the number of ports (two), transmission powers for the respective ports are equally distributed.

However, a Rel-18 specification cannot implement the above-described power distribution. This is because in Rel. 18, all the SRS resources in an SRS resource set have the same transmission power.

In other words, it is necessary to study a control method for power distribution for Rel. 19 or later versions.

In this way, unless various definitions related to 3Tx UL (for example, PUSCH/SRS) transmission are definite, a UE may fail to control appropriate UL transmission.

Thus, the inventors of the present invention came up with the idea of a radio communication method according to the present disclosure.

Embodiments according to the present disclosure will be described in detail with reference to the drawings as follows. The radio communication methods according to respective embodiments may each be employed individually, or may be employed in combination.

### (Various Interpretations)

In the present disclosure, wording in "()" in a sentence may indicate a description of the immediately preceding wording (for example, a description of the spell), rewording, a specific example, a supplementary explanation, and the like. In the present disclosure, regarding wording in "[]" in a sentence, meaning of the entire sentence may be interpreted including such wording, or meaning of the entire sentence may be interpreted without including (by ignoring) such wording. Note that "()" and "[]" may be used for a purpose/meaning other than these.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a TPMI and a TPMI index may be interchangeably interpreted. A port and an antenna port may be interchangeably interpreted. 8 TX (8 transmissions) may mean 8 ports or 8 antenna ports. A port/antenna port may mean a port/antenna port for UL (for example, SRS/PUSCH) transmission. In the present disclosure, an SRS resource set and a resource set may be interchangeably interpreted. A coherent group and an SRS resource set may be interchangeably interpreted.

The present disclosure primarily describes 3 TX, but may also be applied to 4 or higher TX, 2 or lower TX, and the like, similarly to 3 TX. "3" in the following embodiments may be interpreted as "n (which is any integer)." In this case, those of ordinary skill in the art will be able to appropriately interpret the number of layers/number of ports described based on the assumption that a maximum value is "3," by assuming that the maximum value is "n."

Note that, in the present disclosure, "having capability of ..." and "supporting/reporting capability of ..." may be interchangeably interpreted.

In the present disclosure, a rank, a transmission rank, the number of layers, and the number of antenna ports may be interchangeably interpreted. A case that one codeword is applied and a case that the number of layers is 4 layers or smaller may be interchangeably interpreted. A case that two codewords are applied and a case that the number of layers is greater than 4 layers may be interchangeably interpreted.

In the present disclosure, a table and one or a plurality of tables may be interchangeably interpreted.

In the present disclosure, distribution, separation, and division may be interchangeably interpreted.

In the present disclosure, drop, stop, cancel, puncture, rate match, postpone, not transmit, and the like may be interchangeably interpreted.

DCI in the following embodiments may mean DCI for scheduling at least one of a PUSCH and a PDSCH (for example, DCI format 0_x or 1_x (where x is an integer)). The following embodiments presuppose codebook-based transmission (PUSCH), but are not limited to this.

In the present disclosure, an association between precoding information (TPMIs) and the numbers of layers (TRIs), and indices (precoding information field values) may be defined in specification 2 for multiplexing and channel coding (Multiplexing and channel coding/Downlink transport channels and control information/Downlink control information/DCI formats/DCI format0_1). In the present disclosure, the association, a table D-x, a TRI/TPMI indication table, a DCI indication table, and a precoding information table may be interchangeably interpreted.

In the present disclosure, a precoding matrix and a precode may be interchangeably interpreted.

In each of the following embodiments, a precoding matrix/precoder may mean a non-coherent precoder.

In the present disclosure, 3 ports, 3Tx, and three antenna ports may be interchangeably interpreted. In other words, in the present disclosure, a port, Tx, and an antenna port may be used interchangeably.

In the present disclosure, 3-port PUSCH transmission, 3Tx PUSCH transmission, and PUSCH transmission using three antenna ports may be interchangeably interpreted.

In the present disclosure, a size relation between a resource/resource set/resource group associated with an SRS is represented as resource < resource group < resource set, but is not limited to this.

In each of the following embodiments, a number (for example, 0, 1, 2, or the like) corresponding to a certain index (for example, TPMI index, antenna port index, or the like) may be interpreted as a number with # (for example, #0, #1, #2, or the like).

In the present disclosure, the UE can be configured/indicated with a codebook (codebook subset) for 3TX UE.

In the present disclosure, SRS configuration and SRS antenna switching configuration may be interchangeably interpreted.

In the present disclosure, a parameter (capability) related to the number of antenna ports available for reception/transmission, an existing UE capability, a new UE capability (parameter), a parameter related to an SRS resource [set], a parameter related to a resource type, srs-AntennaSwitching2SP-1Periodic, srs-ExtensionAperiodicSRS, srs-OneAP-SRS, and the like may be interchangeably interpreted.

### (Radio Communication Method)

The embodiments of the present disclosure can be broadly classified into the following.
- First embodiment: SRS antenna switching configuration for 3TX UE.
- Second embodiment: Support of SRS antenna switching for 3TX UE.
- Third embodiment: Restriction on SRS antenna switching for 3TX UE.
- Fourth embodiment: New SRS antenna switching configuration for 3TX UE.
- Fifth embodiment: Distribution of SRS transmission power in 3TX PUSCH transmission.
- Sixth embodiment: Limitation to a time domain for SRS resources in 3TX PUSCH transmission.

The embodiments will be described below based on these. Note that the first to fourth embodiments correspond to analysis 1 described above, and primarily relate to SRS antenna switching. The fifth to sixth embodiments correspond to analysis 2 described above, and primarily relate to SRS power control.

In the present disclosure, the embodiments/options may each be employed individually, or two or more of the embodiments/options may be employed in combination.

In the present disclosure, an association between precoding matrices W and TPMI indices may be defined in specification 1 for physical channels and modulation (Physical channels and modulation/Uplink/Physical channels/Physical uplink shared channel/Precoding). In the present disclosure, the association, a table P-x, a TMPI table, a precoding matrix table, and a precoder table may be interchangeably interpreted.

For example, for one SRS resource set whose usage is configured as a codebook, a possible configuration of SRS resources (correspondence relation between resource sets/resources) may be at least one of the following patterns (which may also be referred to as configuration patterns). In other words, the UE may control UL transmission (PUSCH/SRS transmission), based on the following patterns.

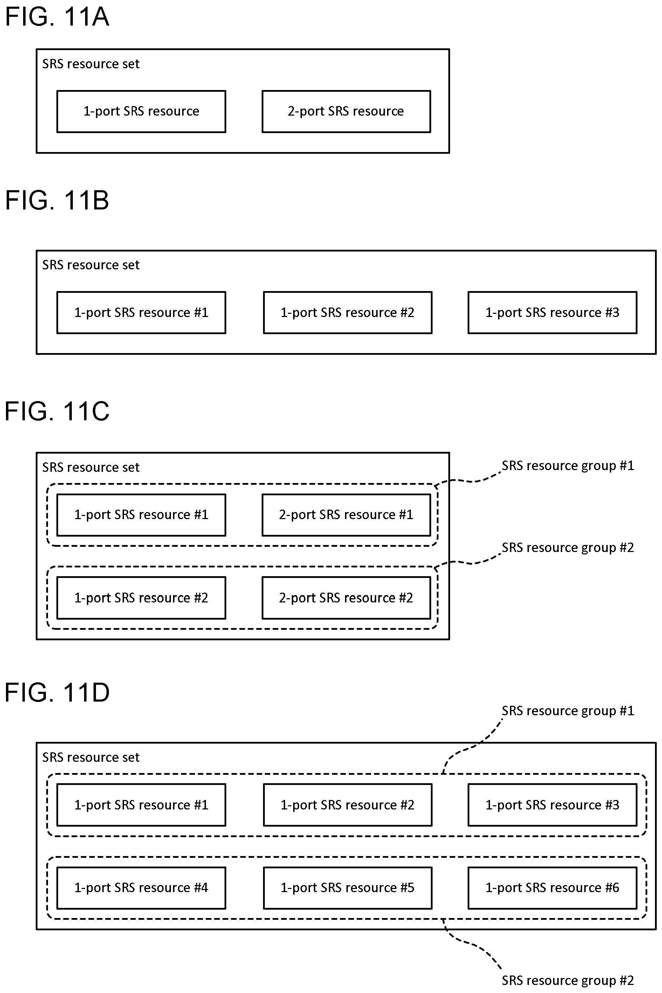

FIGS. 11A to 11D are conceptual diagrams to show correspondence relations between resource sets/resources (patterns 1 to 4) in a codebook for 3TX UE. FIG. 11A corresponds to pattern 1, FIG. 11B corresponds to pattern 2, FIG. 11C corresponds to pattern 3, and FIG. 11D corresponds to pattern 4.

### <Pattern 1>

- One 1-port SRS resource and one 2-port SRS resource are associated with one SRS resource set. In other words, the one SRS resource set includes one 1-port SRS resource and one 2-port SRS resource (see FIG. 11A).

### <Pattern 2>

- Three 1-port SRS resources are associated with one SRS resource set. In other words, the one SRS resource set includes three 1-port SRS resources #1 to #3 (see FIG. 11B).

### <Pattern 3>

- Two 1-port SRS resources and two 2-port SRS resources are associated with one SRS resource set. In other words, the one SRS resource set includes two 1-port SRS resources and two 2-port SRS resources.

Note that, in pattern 3, the plurality of (four) SRS resources are divided into a plurality of (two) groups (are grouped into a subset). The plurality of groups may be referred to as SRS resource groups.

Each group (SRS resource group) includes two SRS resources (one 1-port SRS resource and one 2-port SRS resource). For example, one of the groups (SRS resource group #1, which may be referred to as a first group) may include a first 1-port SRS resource (1-port SRS resource #1) and a first 2-port SRS resource (2-port SRS resource #1), and the other of the groups (SRS resource group #2, which may be referred to as a second group) may include a second 1-port SRS resource (1-port SRS resource #2) and a second 2-port SRS resource (2-port SRS resource #2) (see FIG. 11C).

### <Pattern 4>

- Six 1-port SRS resources are associated with one SRS resource set. In other words, the one SRS resource set includes six 1-port SRS resources #1 to #6.

Note that, in pattern 4, the plurality of (six, which may be, for example, multiples of 3 (3N)) SRS resources are divided into a plurality of (two, for example, N) groups (are grouped into a subset). The plurality of groups may be referred to as SRS resource groups.

Each group (SRS resource group) includes three SRS resources (three 1-port SRS resources). For example, one of the groups (SRS resource group #1, which may be referred to as a first group) may include first to third 1-port SRS resources (1-port SRS resources #1 to #3), and the other of the groups (SRS resource group #2, which may be referred to as a second group) may include fourth to sixth 1-port SRS resources (1-port SRS resources #4 to #6) (see FIG. 11D).

As described in patterns 1 to 4 described above, a plurality of (two or more) SRS resources may be associated with one SRS resource set. In other words, one SRS resource set may include a plurality of (two or more) SRS resources (for example, two to six SRS resources).

In particular, in patterns 3 to 4, a plurality of SRS resources in one SRS resource set may constitute/form a plurality of groups (SRS resource groups described above). In this case, each group may include at least two (a plurality of) SRS resources.

Each of the following embodiments may be applied to UL transmission control presupposing patterns 1 to 4 described above.

### <First Embodiment>

The first embodiment relates to SRS antenna switching configuration for 3TX UE.

For the SRS antenna switching configuration for 3TX UE, the following options may be applied/considered. In other words, the UE may control SRS transmission, according to at least one of the following options.

### {Option 1}

Up to two (i.e., one or two) SRS resources (SRS resources using four antenna ports) may be configured for one SRS resource set. Here, which three of the four antenna ports are actually used and correspond to antenna ports for TPMI indication may be predefined by a specification (for example, antenna ports 0 to 2 for an SRS correspond to antenna ports 0 to 2 with TPMIs (TPMI = 0 to 2)) or may be configured in an SRS configuration.

In this case, even if an SRS using four antenna ports is configured, the UE transmits the SRS by using 3TX (three SRS antenna ports 0 to 2) for the configuration (4-port SRS configuration).

In other words, in this case, even when an SRS using four antenna ports is configured, the UE may control transmission of an SRS (PUSCH) by assuming that an SRS using three antenna ports is configured.

### {Option 2}

A 3-port SRS resource (SRS resources using three antenna ports) may mean one given 1-port SRS (SRS corresponding to one antenna port) and two other 2-port SRSs (SRS corresponding to two antenna ports) ({1, 2}-port SRS resources). Here, which antenna port the three ports (three antenna ports) correspond to for TPMI indication may be predefined by a specification (for example, a 1-port SRS corresponds to antenna port 0 with a TPMI and a 2-port SRS corresponds to antenna ports 1 and 2 with TPMIs, or a 2-port SRS corresponds to antenna ports 0 and 1 with TPMIs and a 1-port SRS corresponds to antenna port 2 with a TPMI), may be configured in SRS configuration, or may be dynamically indicated by a new field in DCI.

### {Option 3}

A 3-port SRS resource (SRS resources using three antenna ports) may mean three 1-port SRSs (SRS corresponding to one antenna port) ({1, 1, 1}-port SRS resources). Here, which antenna port the three ports (three antenna ports) correspond to for TPMI indication may be predefined by a specification (for example, a first 1-port SRS corresponds to antenna port 0 with a TPMI, a second 1-port SRS corresponds to antenna port 1 with a TPMI, and a third 1-port SRS corresponds to antenna port 2 with a TPMI), may be configured in SRS configuration, or may be dynamically indicated by a new field in DCI.

In each option described above, SRS configuration for setting antenna switching usage may be supported for 3-port SRSs, according to (reporting of) a UE capability.

In option 2/3 described above, a certain guard time (for example, Y OFDM symbols: Y may be predefined/configured/indicated) may be inserted between SRS resources of different time domain resources.

The SRSs supported in the SRS configuration for setting antenna switching usage may be at least one of the following.
- Opt A: Periodic SRS.
- Opt B: Semi-persistent SRS.
- Opt C: Aperiodic SRS.

Note that whether Opt A to Opt C are supported for antenna switching may follow a UE capability.

According to the present embodiment, SRS antenna switching configuration for 3TX UE can be appropriately supported.

### <Second Embodiment>

The second embodiment relates to support of SRS antenna switching for 3TX UE.

### {Option 1}

An antenna with new 3TyR may not be supported for a 3TX UE. SRS configuration for antenna switching to which existing 1TyR/2TyR is applied may be supported/configured for the 3TX UE, according to a UE capability [report]. A corresponding UE capability may be indicated by existing supportedSRS-TxPortSwitch/supportedSRS-TxPortSwitch-v1610/supportedSRS-TxPortSwitchBeyond4Rx-r17, or a new UE capability may be introduced.

In option 1, the following existing downgrading configuration may be supported (may be combined).
- t1r1, t1r2, t1r4, t1r6, t1r8, t2r2, t2r4, t2r6, t2r8.

### {Option 2}

For the 3TX UE, an antenna with at least one of 3TyR to be described below may be supported. The support may be determined according to a new UE capability. The SRS configuration supported for antenna switching may be defined for an antenna with at least one of 3TyR to be described below.
- 3T3R, 3T4R, 3T6R, 3T8R.

In option 2, the following existing downgrading configuration (and a corresponding existing SRS configuration for antenna switching) may be supported (may be combined).
- t1r1, t1r2, t2r2 for 3T3R.
- t1r1, t1r2, t1r4, t2r2, t2r4 for 3T4R.
- t1r1, t1r2, t1r3, t1r4, t1r6, t2r2, t2r3, t2r4, t2r6, t3r3, t3r4, t3r6 for 3T6R.
- t1r1, t1r2, t1r3, t1r4, t1r6, t1r8, t2r2, t2r3, t2r4, t2r6, t2r8, t3r3, t3r4, t3r6, t3r8 for 3T8R.

In option 2, for reporting of the corresponding configuration, an existing UE capability may be used in place of the new UE capability.

### {Option 3}

For the 3TX UE, an antenna with at least one of 3TyR to be described below may be supported. The support may be determined according to a new UE capability. The SRS configuration supported for antenna switching may be defined for an antenna with at least one of 3TyR to be described below.
- 3T3R, 3T4R, 3T6R, 3T8R.

In option 3, the following existing and new downgrading configurations may be supported (may be combined).
- t1r1, t1r2, t1r3, t2r2, t2r3, t3r3 for 3T3R.
- t1r1, t1r2, t1r3, t1r4, t2r2, t2r3, t2r4, t3r3, t3r4 for 3T4R.
- t1r1, t1r2, t1r4, t1r6, t2r2, t2r4, t2r6 for 3T6R.
- t1r1, t1r2, t1r4, t1r6, t1r8, t2r2, t2r4, t2r6, t2r8 for 3T8R.

In option 3, whether one or a plurality of downgrading configurations are supported may follow a UE capability.

According to the present embodiment, it is possible to appropriately control support of SRS antenna switching (downgrading configuration) for 3TX UE.

### <Third Embodiment>

The third embodiment relates to restriction on SRS antenna switching for 3TX UE.

A restriction for each slot/symbol may be applied to the antenna with new 3TyR described above. A different restriction for each slot/symbol may be applied to different 3TyR. The application of the restriction may follow a UE capability.

For example, in cases of 3T4R, 3T6R, 3T8R, a UE does not expect that a plurality of SRS resource sets set with antenna switching usage are configured/triggered in the same slot.

For example, in a case of 3T = 3R, the UE does not expect that a plurality of SRS resource sets set with antenna switching usage are configured/triggered in the same symbol.

In other words, the UE may judge application of the restriction for each slot/symbol, depending on the number of antenna ports available for reception.

According to the present embodiment, the UE can apply a restriction on SRS antenna switching for 3TX UE.

### <Fourth Embodiment>

The fourth embodiment relates to new SRS antenna switching configuration for 3TX UE.

For new SRS antenna switching configuration corresponding to new downgrading configuration, the fourth embodiment can be classified into aspect 4-1 to aspect 4-6, depending on the number of antenna ports available for reception/transmission.

### <<Aspect 4-1>>

The present aspect corresponds to a case of 3T3R.

3 ports may be considered for each SRS resource.

An existing UE capability (srs-AntennaSwitching2SP-1Periodic) or a new UE capability (srs-AntennaSwitching2SP-1Periodic3T3R) may be applied.

In the present disclosure, 0 SRS resources [sets] being configured may mean that no SRS resource [set] is configured.

### (Example Description of Specification)

- UE sounding procedure for DL CSI acquisition 1T = 1R.

In a case of xT = yR (1T = 1R, 2T = 2R, 3T = 3R, 4T = 4R), up to two SRS resource sets may be configured. Each resource set includes one SRS resource.

When the UE has not reported the existing UE capability (when srs-AntennaSwitching2SP-1Periodic has not been notified/indicated), the number of SRS ports of each SRS resource is equal to 1, 2, 3, 4, or 8.

Two SRS resource sets with a resource type (resourceType) for SRS resource set (SRS-ResourceSet) configured as "semi-persistent" and one SRS resource set with a resource type for SRS resource set configured as "periodic" can be configured. In this case, the two SRS resource sets configured as "semi-persistent" are not activated simultaneously.

Alternatively, when the UE has reported the UE capability (when srs-AntennaSwitching2SP-1Periodic, srs-AntennaSwitching2SP-1Periodic8T8R, or srs-AntennaSwitching2SP-1Periodic3T3R has been notified/indicated), up to two SRS resource sets may be configured. Each resource set includes one SRS resource. The number of SRS ports of each SRS resource is equal to 1, 2, 3, 4, or 8.

### <<Aspect 4-2>>

The present aspect corresponds to a case of 3T8R.

When a new SRS antenna switching configuration is applied to 3T8R, at least one of configurations described in the following options may be supported.

### (Option 1)

Zero or one SRS resource set with a resource type for SRS resource set configured as "periodic" may be configured. The one SRS resource set includes three SRS resources transmitted in different symbols.

Opt 1a: Each SRS resource consists of three SRS ports.
Opt 1b: The three respective SRS resources include 3 ports, 3 ports, and 2 ports. Different SRS resources are associated with different UE antenna ports.

### (Option 2)

When the UE has not reported the existing/new UE capability (when srs-AntennaSwitching2SP-1Periodic or a new parameter has not been notified/indicated), zero or one SRS resource set with a resource type for SRS resource set configured as "semi-persistent" may be configured. The one SRS resource set includes three SRS resources transmitted in different symbols.

Opt 2a: Each SRS resource consists of three SRS ports.
Opt 2b: The three respective SRS resources include 3 ports, 3 ports, and 2 ports. Different SRS resources are associated with different UE antenna ports.

### (Option 3)

When the UE has reported the existing/new UE capability (when srs-AntennaSwitching2SP-1Periodic or a new parameter has been notified/indicated), up to two SRS resource sets with a resource type for SRS resource set configured as "semi-persistent" and up to one SRS resource set configured as "periodic" may be configured.

Here, the two SRS resource sets configured as "semi-persistent" are not activated simultaneously. Each SRS resource set includes three SRS resources transmitted in different symbols.

Opt 3a: Each SRS resource consists of three SRS ports.
Opt 3b: The three respective SRS resources include 3 ports, 3 ports, and 2 ports. Different SRS resources are associated with different UE antenna ports.

### (Option 4)

Any of zero to three SRS resource sets with a resource type for SRS resource set configured as "aperiodic" may be configured.

When one SRS resource set including three SRS resources transmitted in different symbols is configured (one SRS resource set includes three SRS resources), Opt 4a or Opt 4b below may be applied to SRS ports of each SRS resource.

Opt 4a: Each SRS resource consists of three SRS ports.
Opt 4b: The three respective SRS resources (when configured) include 3 ports, 3 ports, and 2 ports. Different SRS resources are associated with different UE antenna ports.

When two SRS resource sets including a total of three SRS resources transmitted in different symbols are configured, one of the SRS resource sets includes two SRS resources, and the other of the SRS resource sets includes one SRS resource set. Opt 4a or Opt 4b described above may be applied to SRS ports of each SRS resource.

When three SRS resource sets including a total of three SRS resources transmitted in different symbols are configured, each SRS resource set includes one SRS resource. Opt 4a or Opt 4b described above may be applied to SRS ports of each SRS resource.

### <<Aspect 4-3>>

The present aspect corresponds to a case of 3T6R.

When a new SRS antenna switching configuration is applied to 3T6R, at least one of configurations described in the following options may be supported.

### (Option 1)

Zero or one SRS resource set with a resource type for SRS resource set configured as "periodic" may be configured. The one SRS resource set includes two SRS resources transmitted in different symbols. Each SRS resource consists of three SRS ports. SRS ports of the SRS resources in the one SRS resource set are associated with different UE antenna ports.

### (Option 2)

When the UE has not reported the existing/new UE capability (when srs-AntennaSwitching2SP-1Periodic or a new parameter has not been notified/indicated), zero or one SRS resource set with a resource type for SRS resource set configured as "semi-persistent" may be configured.

Alternatively, when the UE has reported the existing UE capability (when srs-AntennaSwitching2SP-1Periodic has been notified/indicated), up to two SRS resource sets with a resource type for SRS resource set configured as "semi-persistent" and up to one SRS resource set configured as "periodic" may be configured.

Here, the two SRS resource sets configured as "semi-persistent" are not activated simultaneously. Each SRS resource set includes two SRS resources transmitted in different symbols. Each SRS resource consists of three SRS ports. SRS ports of the SRS resources in the one SRS resource set are associated with different UE antenna ports.

### (Option 3)

Any of zero to two SRS resource sets with a resource type for SRS resource set configured as "aperiodic" may be configured.

When one SRS resource set is configured, the SRS resource set includes two SRS resources transmitted in different symbols. Each SRS resource consists of three SRS ports. SRS ports of the SRS resources in the one SRS resource set are associated with different UE antenna ports.

When two SRS resource sets are configured, a total of two SRS resources are transmitted in different symbols of two different slots. SRS ports of the SRS resources in the two configured SRS resource sets are associated with different UE antenna ports.

### <<Aspect 4-4>>

The present aspect corresponds to a case of 3T4R.

When a new SRS antenna switching configuration is applied to 3T4R, at least one of configurations described in the following options may be supported.

### (Option 1)

When the UE has reported only the existing UE capability/new UE capability (when only srs-AntennaSwitching2SP-1Periodic or a new parameter has been notified/indicated), up to two SRS resource sets with a resource type for SRS resource set configured as "semi-persistent" and up to one SRS resource set configured as "periodic" may be configured.

Alternatively, up to two SRS resource sets configured with different resource types may be configured.

Here, the two SRS resource sets configured as "semi-persistent" are not activated simultaneously. Each SRS resource set includes two SRS resources transmitted in different symbols.

Opt 1a: Each SRS resource consists of three SRS ports.
Opt 1b: Each SRS resource consists of three SRS ports.
Opt 1c: The two respective SRS resources include 3 ports and 1 port. Different SRS resources are associated with different UE antenna ports.

### (Option 2)

When the UE has reported only the existing UE capability/new UE capability (when only srs-ExtensionAperiodicSRS or a new parameter has been notified/indicated), up to two SRS resource sets with a resource type for SRS resource set configured as "periodic" and up to one SRS resource set configured as "periodic" or "semi-persistent" may be configured.

Alternatively, up to two SRS resource sets configured with different resource types may be configured.

When two SRS resource sets with a resource type configured as "periodic" are configured, a total of two SRS resources are transmitted in different symbols of two different slots.

When one SRS resource set with a resource type configured as "periodic" is configured, a total of two SRS resources are transmitted in different symbols of the same slot.

Each SRS resource set with a resource type configured as "periodic" or "semi-persistent" includes two SRS resources transmitted in different symbols.

Opt 2a: Each SRS resource consists of three SRS ports.
Opt 2b: Each SRS resource consists of three SRS ports.
Opt 2c: The two respective SRS resources include 3 ports and 1 port. Different SRS resources are associated with different UE antenna ports.

### (Option 3)

When the UE has not reported the existing/new UE capability (when srs-AntennaSwitching2SP-1Periodic or a new parameter has not been notified/indicated), any of zero to two SRS resource sets with a resource type for SRS resource set configured as "periodic" or "semi-persistent" may be configured.

Alternatively, when the UE has reported the existing/new UE capability (when srs-AntennaSwitching2SP-1Periodic or a new parameter has been notified/indicated), up to two SRS resource sets with a resource type for SRS resource set configured as "semi-persistent" and up to one SRS resource set configured as "periodic" may be configured.

Here, the two SRS resource sets configured as "semi-persistent" are not activated simultaneously. Each SRS resource set includes two SRS resources transmitted in different symbols.

Opt 3a: Each SRS resource consists of three SRS ports.
Opt 3b: Each SRS resource consists of three SRS ports.
Opt 3c: The two respective SRS resources include 3 ports and 1 port. Different SRS resources are associated with different UE antenna ports.

### (Option 4)

When the UE has not reported the existing/new UE capability (when srs-ExtensionAperiodicSRS or a new parameter has not been notified/indicated), zero or one SRS resource set with a resource type for SRS resource set configured as "periodic" may be configured.

Alternatively, when the UE has reported the existing/new UE capability (when srs-ExtensionAperiodicSRS has been notified/indicated), up to two SRS resource sets with a resource type for SRS resource set configured as "periodic" may be configured.

When two SRS resource sets are configured, a total of two SRS resources are transmitted in different symbols of two different slots. One SRS resource is configured for each of the two configured SRS resource sets.

Opt 4a: Each SRS resource consists of three SRS ports.
Opt 4b: Each SRS resource consists of three SRS ports.
Opt 4c: The two respective SRS resources include 3 ports and 1 port. Different SRS resources are associated with different UE antenna ports.

### (Option 5)

When the UE has not reported the existing/new UE capability (when srs-AntennaSwitching2SP-1Periodic or a new parameter has not been notified/indicated), up to two SRS resource sets configured with different resource types may be configured. Each SRS resource set includes two SRS resources transmitted in different symbols.

Opt 5a: Each SRS resource consists of three SRS ports.
Opt 5b: Each SRS resource consists of three SRS ports.
Opt 5c: The two respective SRS resources include 3 ports and 1 port. Different SRS resources are associated with different UE antenna ports.

### <<Aspect 4-5>>

The present aspect corresponds to a case of 1T3R.

For 1T3R, at least one of configurations described in the following options may be supported.

### (Option 1)

When the UE has not reported the existing/new UE capability (when srs-AntennaSwitching2SP-1Periodic or a new parameter has not been notified/indicated), zero or one SRS resource set with a resource type for SRS resource set configured as "periodic" or "semi-persistent" may be configured.

Alternatively, when the UE has reported the existing/new UE capability (when srs-AntennaSwitching2SP-1Periodic or a new parameter has been notified/indicated), up to two SRS resource sets with a resource type for SRS resource set configured as "semi-persistent" and up to one SRS resource set configured as "periodic" may be configured.

Here, the two SRS resource sets configured as "semi-persistent" are not activated simultaneously. Each SRS resource set includes three SRS resources transmitted in different symbols. Each SRS resource in each SRS resource set consists of one SRS port. An SRS port of each SRS resource is associated with a different UE antenna port.

### (Option 2)

When the UE has not reported the existing/new UE capability (when srs-ExtensionAperiodicSRS, srs-OneAP-SRS, or a new parameter has not been notified/indicated), zero or two SRS resource sets with a resource type for SRS resource set configured as "periodic" may be configured.

Alternatively, when the UE has reported the two existing UE capabilities (when srs-ExtensionAperiodicSRS and srs-OneAP-SRS have been notified/indicated), any of zero to three SRS resource sets with a resource type for SRS resource set configured as "periodic" may be configured.

Alternatively, when the UE has reported only the existing/new UE capability (when srs-ExtensionAperiodicSRS or only a new parameter has been notified/indicated), any of zero and two to three SRS resource sets with a resource type for SRS resource set configured as "periodic" may be configured.

Alternatively, when the UE has reported only the existing/new UE capability (when srs-OneAP-SRS or only a new parameter has been notified/indicated), any of zero to two SRS resource sets with a resource type for SRS resource set configured as "periodic" may be configured.

When one SRS resource set is configured, a total of three SRS resources are transmitted in different symbols in the same symbol. SRS ports of the respective SRS resources in the one SRS resource set are associated with different UE antenna ports.

When two SRS resource sets are configured, a total of three SRS resources are transmitted in different symbols. SRS ports of the respective SRS resources in the two SRS resource sets are associated with different UE antenna ports.

When two SRS resource sets are configured, one of the SRS resource sets consists of one SRS resource, and the other of the SRS resource sets consists of two SRS resource sets.

When three SRS resource sets are configured, a total of three SRS resources are transmitted in different symbols if the UE can support three SRS resources. SRS ports of the respective SRS resources in the three SRS resource sets are associated with different UE antenna ports.

Each of the three SRS resource sets consists of one SRS resource.

The UE may expect that values of a higher layer parameter "periodicSRS-ResourceTrigger" or values of an entry in AperiodicSRS-ResourceTriggerList are the same and that values of a higher layer parameter "slotOffset" are different from each other.

### (Option 3)

When the UE has not reported the existing/new UE capability (when srs-AntennaSwitching2SP-1Periodic, srs-ExtensionAperiodicSRS, srs-OneAP-SRS, or a new parameter has not been notified/indicated), zero or one SRS resource set with a resource type for SRS resource set configured as "periodic" or "semi-persistent" may be configured.

When one SRS resource set is configured, a total of three SRS resources are transmitted in different symbols. Each SRS resource in the one SRS resource set consists of one SRS port. An SRS port of each SRS resource is associated with a different UE antenna port.

### (Option 4)

When the UE has not reported the existing/new UE capability (when srs-AntennaSwitching2SP-1Periodic, srs-ExtensionAperiodicSRS, srs-OneAP-SRS, or a new parameter has not been notified/indicated), zero or two SRS resource sets with a resource type for SRS resource set configured as "aperiodic" may be configured.

When two SRS resource sets are configured, a total of three SRS resources are transmitted in different symbols. SRS ports of the respective SRS resources in the two SRS resource sets are associated with different UE antenna ports.

When two SRS resource sets are configured, one of the SRS resource sets consists of one SRS resource, and the other of the SRS resource sets consists of two SRS resource sets.

When values of a higher layer parameter "periodicSRS-ResourceTrigger" or values of an entry in AperiodicSRS-ResourceTriggerList are the same, and a higher layer parameter "availableSlotOffsetList" is not configured for any of SRS resource sets over all the configured BWPs in a CC, the UE may expect that values of a higher layer parameter "slotOffset" are different from each other.

### <<Aspect 4-6>>

The present aspect corresponds to a case of 2T3R.

For 2T3R, at least one of configurations described in the following options may be supported.

### (Option 1)

When the UE has reported only the existing/new UE capability (when srs-AntennaSwitching2SP-1Periodic or only a new parameter has been notified/indicated), up to two SRS resource sets with a resource type for SRS resource set configured as "semi-persistent" and up to one SRS resource set configured as "periodic" may be configured.

Alternatively, up to two SRS resource sets configured with different resource types may be configured.

Here, the two SRS resource sets configured as "semi-persistent" are not activated simultaneously. Each SRS resource set includes two SRS resources.

Opt 1a: Each SRS resource consists of two SRS ports.
Opt 1b: The two respective SRS resources include 2 ports and 1 port. Different SRS resources are associated with different UE antenna ports.

### (Option 2)

When the UE has reported only the existing/new UE capability (when srs-ExtensionAperiodicSRS or only a new parameter has been notified/indicated), up to two SRS resource sets with a resource type for SRS resource set configured as "periodic" and up to one SRS resource set configured as "semi-persistent" or "periodic" may be configured.

Alternatively, up to two SRS resource sets configured with different resource types may be configured.

When two SRS resource sets with a resource type configured as "periodic" are configured, a total of two SRS resources are transmitted in different symbols of two different slots.

When one SRS resource set with a resource type configured as "periodic" is configured, a total of two SRS resources are transmitted in different symbols of the same slot.

Each SRS resource set with a resource type configured as "periodic" or "semi-persistent" includes two SRS resources transmitted in different symbols.

Opt 2a: Each SRS resource consists of two SRS ports.
Opt 2b: The two respective SRS resources include 2 ports and 1 port. Different SRS resources are associated with different UE antenna ports.

### (Option 3)

When the UE has not reported the existing/new UE capability (when srs-AntennaSwitching2SP-1Periodic or only a new parameter has not been notified/indicated), any of zero to two SRS resource sets with a resource type for SRS resource set configured as "periodic" or "semi-persistent" may be configured. When the two SRS resource sets are configured, different respective resource types are configured.

Alternatively, when the UE has reported the existing/new UE capability (when srs-AntennaSwitching2SP-1Periodic or only a new parameter has been notified/indicated), up to two SRS resource sets with a resource type for SRS resource set configured as "semi-persistent" and up to one SRS resource set configured as "periodic" may be configured.

Here, the two SRS resource sets configured as "semi-persistent" are not activated simultaneously. Each SRS resource set includes two SRS resources transmitted in different symbols.

Opt 3a: Each SRS resource consists of two SRS ports.
Opt 3b: The two respective SRS resources include 2 ports and 1 port. Different SRS resources are associated with different UE antenna ports.

### (Option 4)

When the UE has not reported the existing/new UE capability (when srs-ExtensionAperiodicSRS or a new parameter has not been notified/indicated), zero or one SRS resource set with a resource type for SRS resource set configured as "periodic" may be configured.

Alternatively, when the UE has reported the existing/new UE capability (when srs-ExtensionAperiodicSRS or a new parameter has been notified/indicated), up to two SRS resource sets with a resource type for SRS resource set configured as "periodic" may be configured.

When two SRS resource sets are configured, a total of two SRS resources are transmitted in different symbols of two different slots. One SRS resource is configured for each of the two SRS resource sets.

Opt 4a: Each SRS resource consists of two SRS ports.
Opt 4b: The two respective SRS resources include 2 ports and 1 port. Different SRS resources are associated with different UE antenna ports.

### (Option 5)

When the UE has not reported the existing/new UE capability (when srs-AntennaSwitching2SP-1Periodic, srs-ExtensionAperiodicSRS, srs-OneAP-SRS, or a new parameter has not been notified/indicated), up to two SRS resource sets configured with different resource types may be configured.

When two SRS resource sets are configured, each SRS resource set includes two SRS resources transmitted in different symbols.

Opt 5a: Each SRS resource consists of two SRS ports.
Opt 5b: The two respective SRS resources include 2 ports and 1 port. Different SRS resources are associated with different UE antenna ports.

According to the present embodiment, the UE can appropriately control/judge a downgrading configuration, depending on the number of antenna ports available for reception/transmission.

### <Fifth Embodiment>

The fifth embodiment relates to distribution of SRS transmission power in 3TX PUSCH transmission.

When 3TX PUSCH transmission is configured, and a {1, 2}-port SRS resource is configured for sounding of a UL channel, a UE may apply at least one of the following options to control UL transmission.

Note that the following options may be applied to UL transmission using a TDM/FDM scheme.

### {Option 1}

[Configuration related to] Power control parameters (p0, P_{O_SRS,b,f,c}(qₛ), α_{SRS,b,f,c}(qₛ), power control adjustment state l, a path loss RS, and the like) for SRS transmission may be supported for each SRS resource.

When a higher layer parameter "followUnifiedTCI-StateSRS" is not configured/provided for the SRS resource, the following alternatives may be applied.

### (Alt 1)

For one 1-port SRS resource in a given SRS resource set, values of P_{O_SRS,b,f,c}(qₛ) and α_{SRS,b,f,c}(qₛ) and power control adjustment state l are provided by p0AlphaSetforSRS associated with a TCI state (TCI-State/TCI-UL-State) of a 1-port SRS resource with lowest SRS-ResourceId.

RS index q_{d} for acquiring a path loss estimate for SRS transmission is provided by pathlossReferenceRS-Id-r17 associated with/included in a TCI state (TCI-State/TCI-UL-State) of a 1-port SRS resource with lowest SRS-ResourceId in the SRS resource set.

For one 2-port SRS resource in a given SRS resource set, values of P_{O_SRS,b,f,c}(qₛ) and α_{SRS,b,f,c}(qₛ) and power control adjustment state l are provided by p0AlphaSetforSRS associated with a TCI state (TCI-State/TCI-UL-State) of a 2-port SRS resource with lowest SRS-ResourceId.

RS index q_{d} for acquiring a path loss estimate for SRS transmission is provided by pathlossReferenceRS-Id-r17 associated with/included in a TCI state (TCI-State/TCI-UL-State) of a 2-port SRS resource with lowest SRS-ResourceId in the SRS resource set.

### (Alt 2)

For one SRS resource in a given SRS resource set, values of P_{O_SRS,b,f,c}(qₛ) and α_{SRS,b,f,c}(qₛ) and power control adjustment state l are provided by p0AlphaSetforSRS associated with a TCI state (TCI-State/TCI-UL-State) of the SRS resource.

RS index q_{d} for acquiring a path loss estimate for SRS transmission is provided by pathlossReferenceRS-Id-r17 associated with/included in a TCI state (TCI-State/TCI-UL-State) of the SRS resource.

### (Alt 3)

Values of P_{O_SRS,b,f,c}(qₛ) and α_{SRS,b,f,c}(qₛ), power control adjustment state l, and a path loss RS for a given SRS resource are provided by a new parameter associated with/included in a TCI state (TCI-State/TCI-UL-State).

The new parameter may be provided separately from a parameter (TCI-State/TCI-UL-State) related to the TCI state.

The new parameter may be provided only for an SRS resource having the lowest index among an SRS resource set, may be provided for one or more SRS resources among the SRS resource set, or may be provided for all the SRS resources among the SRS resource set.

### (Variations)

Any one of Alt 1 to Alt 3 (different alternatives) may be applied to each of a 1-port SRS and a 2-port SRS. For example, Alt 1 may be applied to the 2-port SRS (similarly to Rel. 18) and Alt 2/3 may be applied to the 1-port SRS (for each SRS resource configuration).

### {Option 1'}

[Configuration related to] Power control parameters (p0, P_{O_SRS,b,f,c}(qₛ), α_{SRS,b,f,c}(qₛ), power control adjustment state l, a path loss RS, and the like) for SRS transmission may be supported for each SRS resource.

When a higher layer parameter "followUnifiedTCI-StateSRS" is configured/provided for the SRS resource, the following alternatives may be applied.

### (Alt 1)

For a 1-port SRS resource in a given SRS resource set, values of P_{O_SRS,b,f,c}(qₛ) and α_{SRS,b,f,c}(qₛ) and power control adjustment state l are provided by p0AlphaSetforSRS associated with an indicated TCI state (TCI-State/TCI-UL-State).

RS index q_{d} for acquiring a DL path loss estimate is provided by pathlossReferenceRS-Id-r17 associated with/included in an indicated TCI state (TCI-State/TCI-UL-State).

When followUnifiedTCI-StateSRS is not provided, the alternative described above (option 1) is applied to a 2-port SRS resource in a given SRS resource set.

In other words, in Alt 1 of the present option, only the power control parameter for the 1-port SRS resource follows the indicated TCI state.

### (Alt 2)

For a 2-port SRS resource in a given SRS resource set, values of P_{O_SRS,b,f,c}(qₛ) and α_{SRS,b,f,c}(qₛ) and power control adjustment state l are provided by p0AlphaSetforSRS associated with an indicated TCI state (TCI-State/TCI-UL-State).

RS index q_{d} for acquiring a DL path loss estimate is provided by pathlossReferenceRS-Id-r17 associated with/included in an indicated TCI state (TCI-State/TCI-UL-State).

When followUnifiedTCI-StateSRS is not provided, the alternative described above (option 1) is applied to a 1-port SRS resource in a given SRS resource set.

In other words, in Alt 2 of the present option, only the power control parameter for the 2-port SRS resource follows the indicated TCI state.

### (Variations)

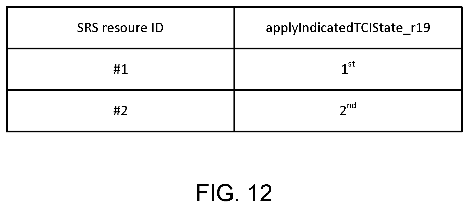

FIG. 12 is a diagram to show an example of association (correspondence relation) between an SRS resource and the new parameter according to the fifth embodiment. For a 2-port SRS resource in a given SRS resource set, a higher layer parameter "applyIndicatedTCIState_r19" = {1st, 2nd} may be configured for each SRS resource (see FIG. 12). As shown in FIG. 12, SRS resource #1 corresponds to the new parameter "1st," and SRS resource #2 corresponds to the new parameter "2nd."

When a unified TCI state for single DCI-based multi-TRP is enhanced, the UE may be configured/indicated with two indicated TCI states for 3TX PUSCH transmission, by higher layer signaling (RRC/MAC CE)/physical layer signaling (DCI).

The above-described variations may be applied to a case of a codebook/non-codebook.

### {Specific Example of Option 1/1'}

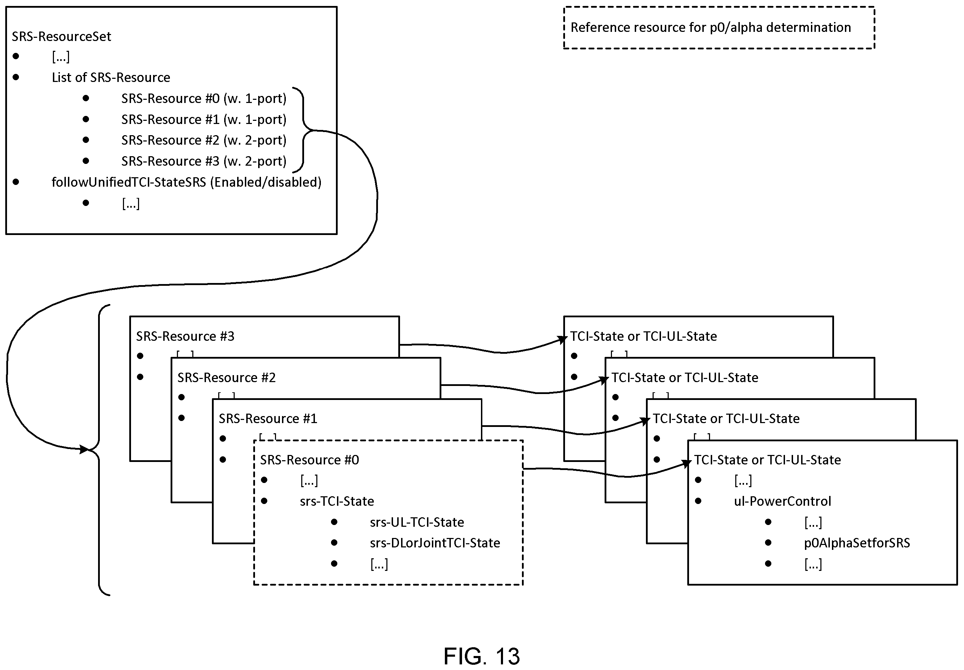

FIG. 13 to FIG. 16 are diagrams to show examples of association between SRS resource sets - SRS resources - TCI states according to the fifth embodiment.

As shown in FIG. 13 to FIG. 16, assume a case where, in a given SRS resource set, 1-port is configured for SRS resources #0/#1 and 2-port is configured for SRS resources #2/#3.

For example, when followUnifiedTCI-StateSRS is configured, P0 and α associated with an indicated TCI state (TCI-State/TCI-UL-State) may be applied. On the other hand, when followUnifiedTCI-StateSRS is not configured, P0 and α associated with an SRS resource with the lowest resource index in the SRS resource set may be applied.

As shown in FIG. 13, SRS resource #0 may be selected as an SRS resource referred to for determination of P0 and α (which may be referred to as a reference resource).

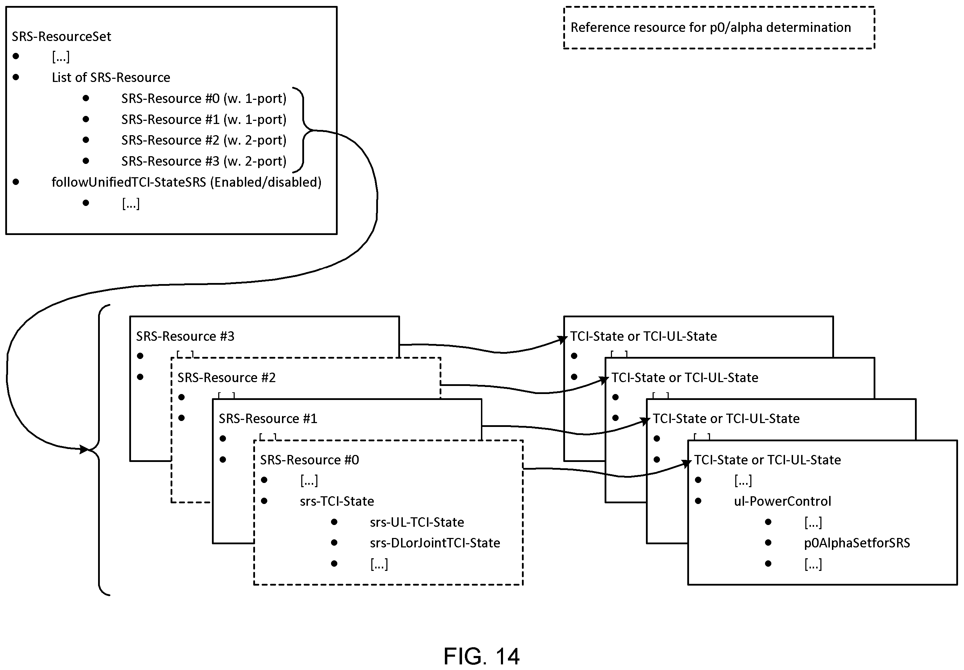

As shown in FIG. 14, SRS resource #0/#2 may be selected as an SRS resource referred to for determination of P0 and α. SRS resource #0/#2 may be an SRS resource with the lowest index among SRS resources with the same number of (one/two) ports.

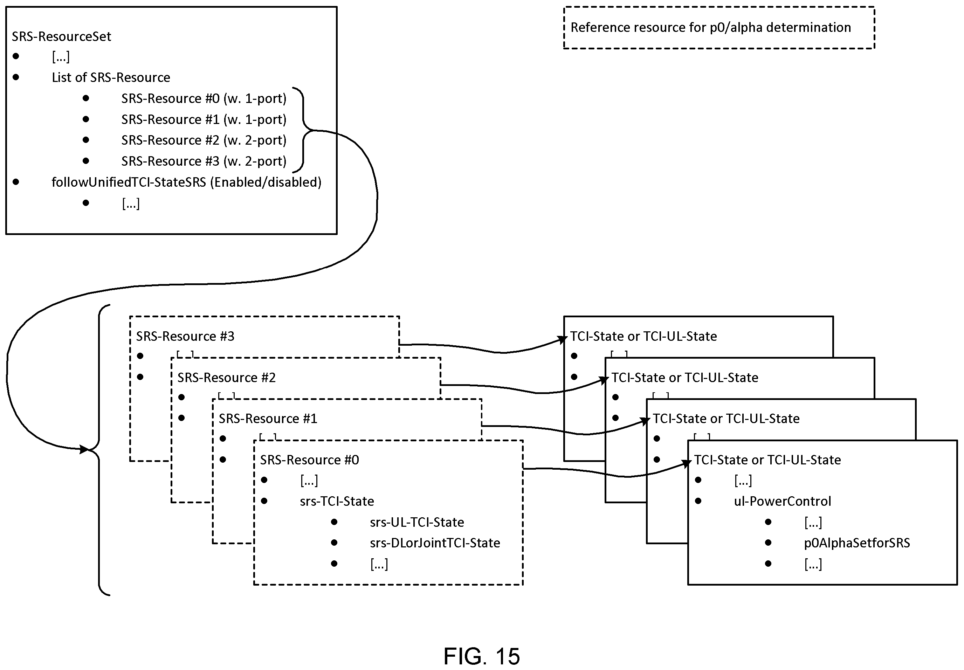

As shown in FIG. 15, SRS resources #0 to #3 (all SRS resources) may be selected as SRS resources referred to for determination of P0 and α. In other words, P0 and α associated with each SRS resource may be applied.

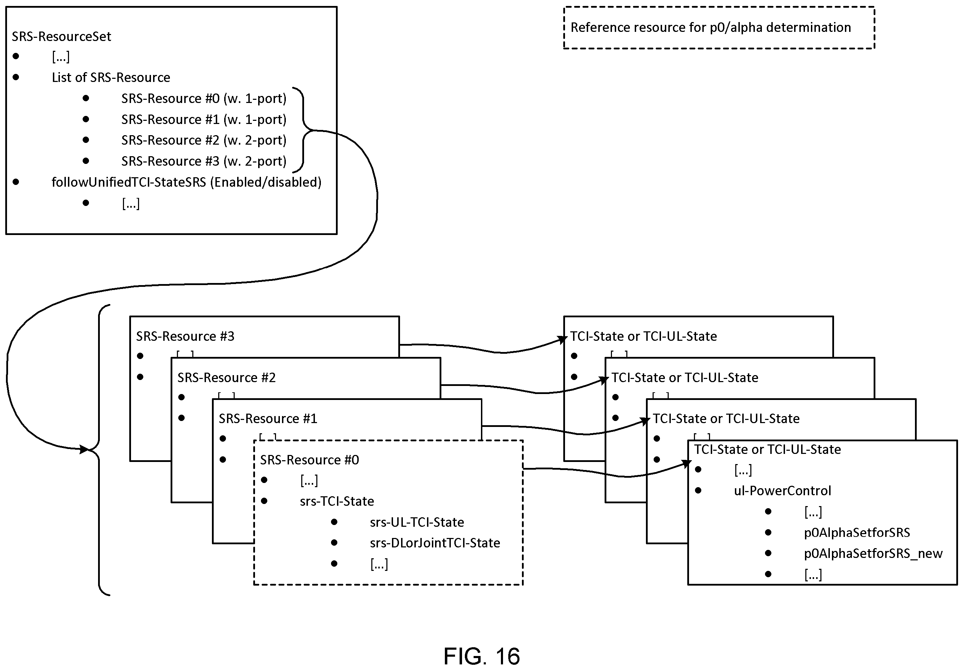

When followUnifiedTCI-StateSRS is not configured, P0 and α indicated by a new parameter (p0AlphaSetforSRS_new) associated with a given SRS resource (for example, SRS resource #0) may be applied, as shown in FIG. 16.

The new parameter may be configured only for an SRS resource having the lowest index among an SRS resource set, may be configured for one or more SRS resources among the SRS resource set, or may be configured for all the SRS resources among the SRS resource set.

### {Option 2}

In option 2 (the same also applies to option 3/4 below), unlike option 1/1', the UE may apply an existing scheme to calculate SRS transmission power (P_{SRS}) by using a power control parameter configured for each SRS resource. However, the transmission power is not directly used as transmission power for [specific to] a 1-port/2-port SRS resource.

The UE may determine/calculate the SRS transmission power (P_{SRS}), according to an existing specification. Transmission power for a 1-port SRS may be (may be the same as) P_{SRS}. Alternatively, P_{SRS} may be used as transmission power for each port for a given SRS resource.

For a 2-port SRS, P_{SRS} may be used as transmission power for each port for a given SRS resource.

In a case of a 2-port SRS, maximum transmission power (P_{CMAX}) for each port may be a value obtained by dividing P_{CMAX} per UE by the number of ports (that is, 2).

### {Option 3}

The UE may determine/calculate the SRS transmission power (P_{SRS}), according to an existing specification. Transmission power for a 2-port SRS may be (may be the same as) P_{SRS}. Transmission power for a 1-port SRS may be half of P_{SRS} (that is, 1/2P_{SRS}).

### {Option 4}

The UE may determine/calculate the SRS transmission power (P_{SRS}), according to an existing specification. The UE may calculate the sum of the transmission power for the 1-port SRS and the transmission power for the 2-port SRS as Σ_{i=1,2}P_{SRS,i}. The transmission power for each port may be a value (1/3∑_{i=1,2}P_{SRS,i}) obtained by dividing the total transmission power by the total number of ports (that is, 3).

In the present disclosure, the UE may apply/consider, for all SRS ports, transmission power per minimum port among a plurality of ports after determining transmission power for each port.

According to the present embodiment, the UE can appropriately control distribution of SRS transmission power in 3TX PUSCH transmission.

### <Sixth Embodiment>

The sixth embodiment relates to limitation to a time domain for SRS resources in 3TX PUSCH transmission.

When 3TX PUSCH transmission is configured, and {1, 1, 1}-port SRS resources are configured for sounding of a UL channel (when three 1-port SRS resources are associated with one SRS resource set), all the SRS resources may share the same resource element (subcarrier).

When 3TX PUSCH transmission is configured, and {1, 1, 1}-port SRS resources are configured for sounding of a UL channel (when three 1-port SRS resources are associated with one SRS resource set), at least two of the three 1-port SRS resources may share the same resource element (subcarrier).

For example, the first 1-port SRS resource and the third 1-port SRS resource may share the same resource element (subcarrier). Alternatively, the first 1-port SRS resource and the second 1-port SRS resource may share the same resource element (subcarrier). Alternatively, the second 1-port SRS resource and the third 1-port SRS resource may share the same resource element (subcarrier).

When 3TX PUSCH transmission is configured, and {1, 2}-port SRS resources are configured for sounding of a UL channel (when one 1-port SRS resource and one 2-port SRS resource are associated with one SRS resource set), the 1-port SRS resource and [at least one port for] the 2-port SRS resource may share the same resource element (subcarrier).

For example, when the 1-port SRS resource and one port for the 2-port SRS resource share the same resource element (subcarrier), the 1-port SRS resource and a first port for the 2-port SRS resource may share the same resource element (subcarrier), or the 1-port SRS resource and a second port for the 2-port SRS resource may share the same resource element (subcarrier).

The above-described first/second/third order may be the order of entries in an RRC configuration list or ascending order/descending order of resource IDs.

According to the present embodiment, the UE can appropriately control 3TX PUSCH transmission, based on a specific condition (limitation to the time domain).

### <Supplements>

### <<Notification of Information to UE>>

Any notification of information [from a network (NW) (for example, a base station (BS))] to a UE (in other words, any reception, in a UE, of information from a BS) in the above-described embodiments may be performed by using physical layer signaling (for example, DCI), higher layer signaling (for example, RRC signaling, MAC CE), a specific signal/channel (for example, PDCCH, PDSCH, reference signal), or any combination of them.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### <<Notification of Information from UE>>

Any notification of information from a UE [to a NW] (in other words, any transmission/reporting, by a UE, of information to a BS) in the above-described embodiments may be performed by using physical layer signaling (for example, UCI), higher layer signaling (for example, RRC signaling, MAC CE), a specific signal/channel (for example, PUCCH, PUSCH, PRACH, reference signal), or any combination of them.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### <<Application of Respective Embodiments>>

In a UE/BS, specific (one or a plurality of) processing/operation/control/assumption/information for at least one embodiment of the above-described embodiments may be applied (may be used) in a case where any one or more of conditions below are satisfied.
- A higher layer parameter indicating the specific processing/operation/control/assumption/information is configured.
- The specific processing/operation/control/assumption/information is determined based on a related higher layer parameter.
- The specific processing/operation/control/assumption/information is indicated/activated/triggered by a MAC CE/DCI/UCI/resource/channel/RS.
- A specific UE capability indicating (or related to) the specific processing/operation/control/assumption/information is reported or supported.
- Application of the specific processing/operation/control/assumption/information is judged based on a specific condition.

The specific UE capability may indicate at least one of the following:
- supporting of specific processing/operation/control/assumption/information for at least one of the above-described embodiments.
- supporting of 3TX UL (PUSCH) transmission.
- supporting of a plurality of different antenna layouts/number of antenna groups.
- a coherent group to support.
- supporting of both 3TX UL transmission and MTRP PUSCH transmission.
- supporting of association between a PTRS port and a DMRS port.
- supporting of distribution of SRS transmission power in 3TX PUSCH transmission.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

In a case where none of the conditions described above is satisfied, the UE/BS may follow an operation defined in an existing 3GPP release.

### (Supplementary Notes)

Regarding one embodiment (first to fourth embodiments) of the present disclosure, the following supplementary notes of the invention will be given.

### {Supplementary Note 1}

A terminal including:
a receiving section that receives an antenna switching configuration for (3TX) uplink (UL) transmission using three antenna ports; and
a control section that judges, based on the configuration, a downgrading configuration to control the UL transmission.

### {Supplementary Note 2}

The terminal according to supplementary note 1, wherein the control section judges the downgrading configuration, according to a capability to support the 3TX UL transmission.

### {Supplementary Note 3}

The terminal according to supplementary note 1 or 2, wherein the control section judges application of a restriction for each slot or symbol for antenna switching, depending on a number of antenna ports available for reception.

### {Supplementary Note 4}

The terminal according to any one of supplementary notes 1 to 3, wherein in the configuration, a plurality of sounding reference signal (SRS) resources with a same or different number of antenna ports are configured, depending on notification of a terminal capability or a resource type.

### (Supplementary Notes)

Regarding one embodiment (fifth/sixth embodiment) of the present disclosure, the following supplementary notes of the invention will be given.

### {Supplementary Note 1}

A terminal including:
a receiving section that receives a sounding reference signal (SRS) configuration for (3TX) uplink (UL) transmission using three antenna ports; and
a control section that applies, in the SRS configuration, a power control parameter for a transmission indication state associated with an SRS resource to the UL transmission.

### {Supplementary Note 2}

The terminal according to supplementary note 1, wherein the control section refers to a specific SRS resource to determine the power control parameter to be applied to the UL transmission.

### {Supplementary Note 3}

The terminal according to supplementary note 1 or 2, wherein the control section divides total transmission power among a plurality of SRS resources by a total number of antenna ports.

### {Supplementary Note 4}

The terminal according to any one of supplementary notes 1 to 3, wherein the control section judges a number of the SRS resources, based on whether repetition transmission with multiple transmission/reception points (MTRP) is configured.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

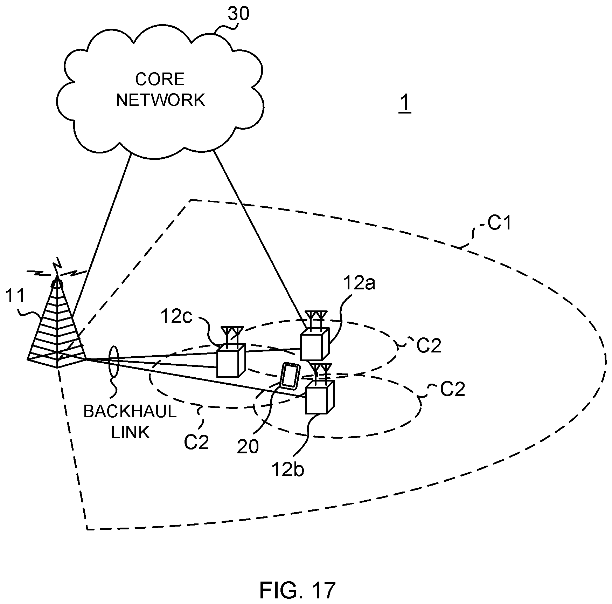

FIG. 17 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

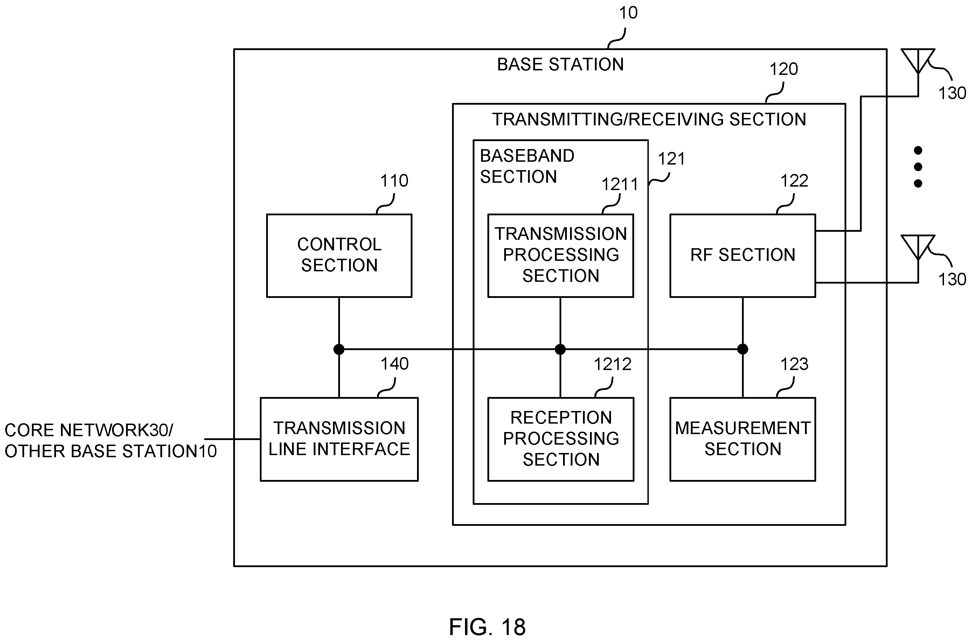

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit an antenna switching configuration for (3TX) uplink (UL) transmission using three antenna ports. The control section 110 may judge, based on the configuration, a downgrading configuration to control reception of the UL transmission transmitted by a terminal.

The transmitting/receiving section 120 may transmit a sounding reference signal (SRS) configuration for (3TX) uplink (UL) transmission using three antenna ports. The control section 110 may apply, in the SRS configuration, a power control parameter for a transmission indication state associated with an SRS resource to control reception of the UL transmission transmitted from a terminal.

### (User Terminal)

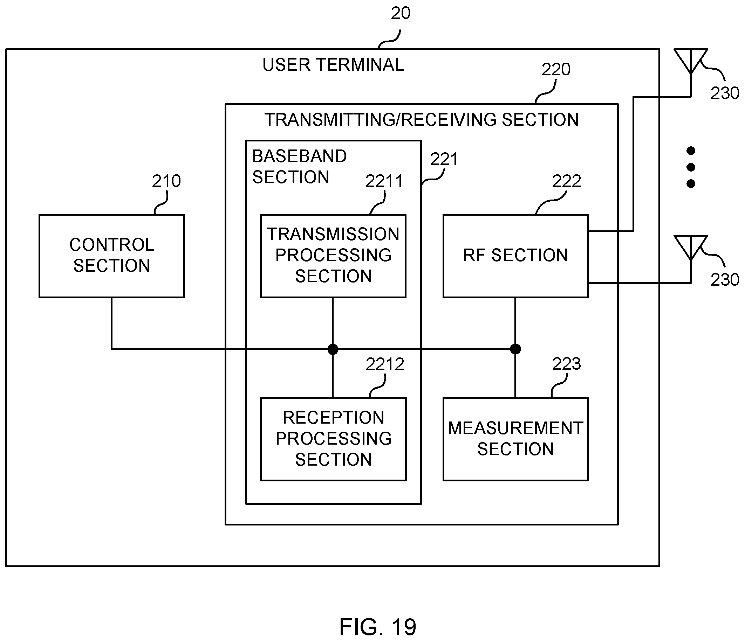

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that the CSI-IM may be referred to as CSI-interference management (CSI-IM) and that the CSI-IM and a zero power (ZP) CSI-RS may be interchangeably interpreted. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive an antenna switching configuration for (3TX) uplink (UL) transmission using three antenna ports. The control section 210 may judge, based on the configuration, a downgrading configuration to control the UL transmission. The control section 210 may judge the downgrading configuration, according to a capability to support the 3TX UL transmission. The control section 210 may judge application of a restriction for each slot or symbol for antenna switching, depending on a number of antenna ports available for reception. In the configuration, a plurality of sounding reference signal (SRS) resources with a same or different number of antenna ports are configured, depending on notification of a terminal capability or a resource type.

The transmitting/receiving section 220 may receive a sounding reference signal (SRS) configuration for (3TX) uplink (UL) transmission using three antenna ports. The control section 210 may apply, in the SRS configuration, a power control parameter for a transmission indication state associated with an SRS resource to the UL transmission. The control section 210 may refer to a specific SRS resource to determine the power control parameter to be applied to the UL transmission. The control section 210 may divide total transmission power among a plurality of SRS resources by a total number of antenna ports. The control section 210 may judge a number of the SRS resources, based on whether repetition transmission with multiple transmission/reception points (MTRP) is configured.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

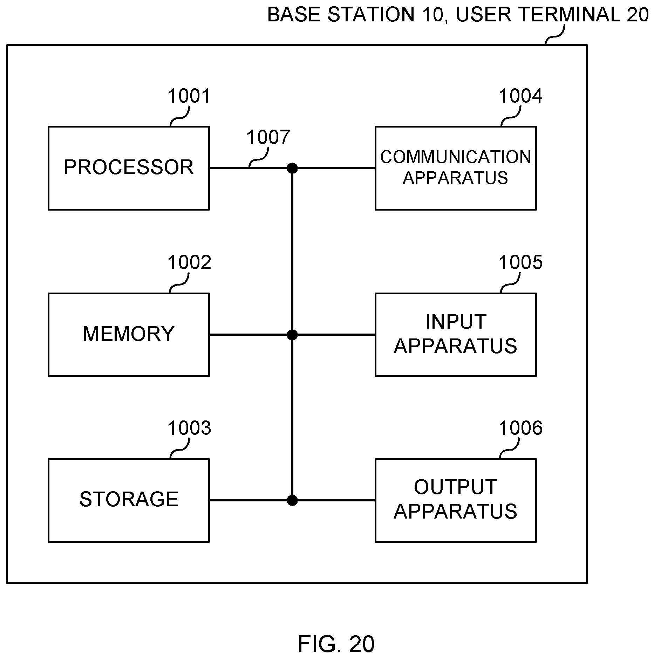

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

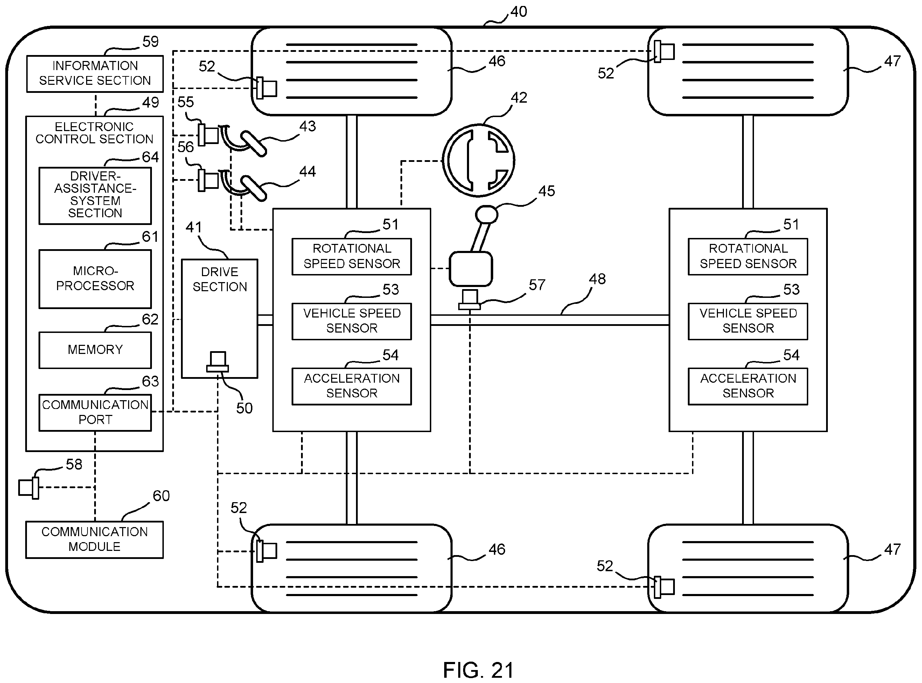

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a sounding reference signal (SRS) configuration for (3TX) uplink (UL) transmission using three antenna ports; and
a control section that applies, in the SRS configuration, a power control parameter for a transmission indication state associated with an SRS resource to the UL transmission.

2. The terminal according to claim 1, wherein
the control section refers to a specific SRS resource to determine the power control parameter to be applied to the UL transmission.

3. The terminal according to claim 1, wherein
the control section divides total transmission power among a plurality of SRS resources by a total number of antenna ports.

4. The terminal according to claim 1, wherein
the control section judges a number of the SRS resources, based on whether repetition transmission with multiple transmission/reception points (MTRP) is configured.

5. A radio communication method for a terminal, the radio communication method comprising:
receiving a sounding reference signal (SRS) configuration for (3TX) uplink (UL) transmission using three antenna ports; and
applying, in the SRS configuration, a power control parameter for a transmission indication state associated with an SRS resource to the UL transmission.

6. A base station comprising:
a transmitting section that transmits a sounding reference signal (SRS) configuration for (3TX) uplink (UL) transmission using three antenna ports; and
a control section that applies, in the SRS configuration, a power control parameter for a transmission indication state associated with an SRS resource to control reception of the UL transmission transmitted from a terminal.
